# EUROPÄISCHE PATENTANMELDUNG

(11) **EP 4 404 455 A1**
(43) Veröffentlichungstag der Anmeldung: **24.07.2024**
(21) Anmeldenummer: 23152296.2
(22) Anmeldetag: 18.01.2023
(51) Int. Cl.: H02P 6/00, H02P 25/066, H02P 25/06, H02P 8/00, H02P 27/08

(54) **KOMMUNIKATION IN MULTI-CARRIER-SYSTEMEN, LINEARMOTOREN, TRANSPORTEINRICHTUNGEN**

(71) Anmelder: Schneider Electric Industries SAS, 92500 Rueil-Malmaison (FR)
(72) Erfinder: Stollberger, Martin, 97292 Uettingen (DE); Kempf, Johannes, 63920 Großheubach (DE); Geoffroy, Guillaume, 77955 Ettenheim (DE)
(74) Vertreter: Manitz Finsterwald Patent- und Rechtsanwaltspartnerschaft mbB

(57) **Zusammenfassung**

Eine Steuerungsvorrichtung (303) zur Steuerung der Speisung von Elektromagneten (12) eines elektrischen Antriebs, insbesondere eines Linearmotor-Stators (300), mit elektrischer Leistung, hat einer Steuerungsvorrichtung (303) mit einer ersten Steuerungskomponente (306a), die dazu ausgelegt ist, nach Maßgabe eines Antriebs-Sollwerts die Erzeugung erste PWM-Steuerungssignale zur Steuerung der Bestromung der Elektromagneten zu veranlassen, und mit einer zweiten Steuerungskomponente (306b), die dazu ausgelegt ist, es nach Maßgabe einer zu übertragenden Information zu veranlassen, die Erzeugung der ersten PWM-Steuerungssignale in eine Erzeugung anderer zweiter PWM-Steuerungssignale abzuwandeln.

## Beschreibung

Die Erfindung betrifft die Kommunikation in Multi-Carrier-Systemen, Linearmotoren und Transporteinrichtungen, insbesondere die Kommunikation in Komponenten von Multi-Carrier-Systemen, Linearmotoren und Transporteinrichtungen, die relativ zueinander beweglich sind.

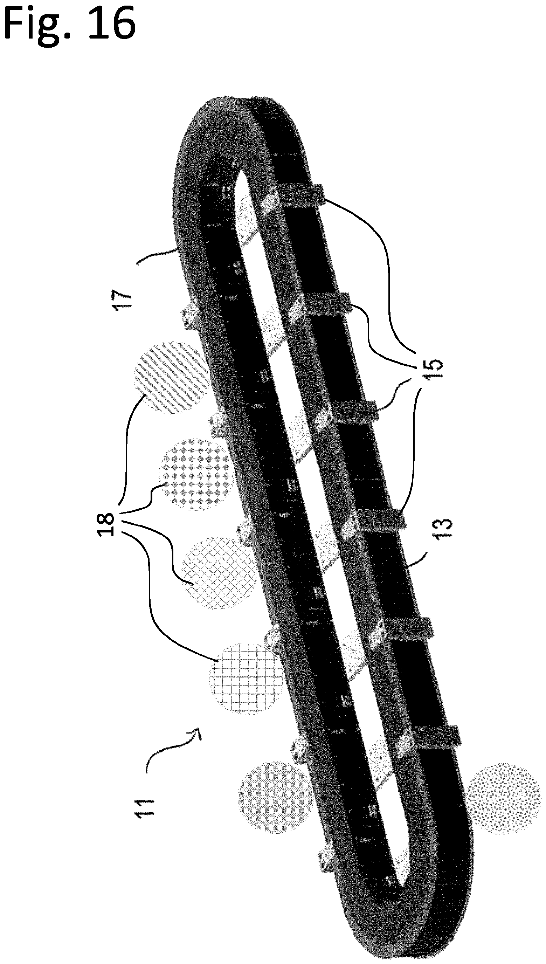

Ein Anwendungsbeispiel für das Feld der Erfindung ist das in Fig. 16 schematisch gezeigte Multi-Carrier-System. Es kann einen Linearmotor mit einem sich in Transportrichtung erstreckenden, optional zu einer Schleife geschlossenen Stator und mit mehreren längs des Stators laufenden Läufern bzw. "Carrier" darstellen. Es kann sich allgemeiner auch um ein schienengebundenes Transportsystem 11 mit einer vorzugsweise zu einer Schleife geschlossenen Schiene 17 und mehreren verfahrbaren Wagen 15 daran bzw. darauf handeln. Läufer bzw. Carrier bzw. Wagen können die schematisch gezeigte Arbeitsstationen 18 anfahren und verlassen. Die Arbeitsstationen 18 können z. B. Bearbeitungsstationen sein. Sie können Robotik und/oder Werkzeugmaschinen und/oder Sensorik oder Messgeräte aufweisen und können autonom arbeiten, aber auch netzwerkangebunden sein. Auch das Multi-Carrier-System kann netzwerkangebunden sein.

In Fig. 16 sind die Wagen 15 äquidistant gezeichnet. Dies kann so sein, muss aber nicht sein. Die Wagen 15 können einzeln und unabhängig voneinander ansteuerbar und bewegbar sein. Sowohl in Position als auch in Bewegungsrichtung und Geschwindigkeit können sie jeweils einzeln beweglich längs der Schiene 17 geführt werden. Das Transportsystem nach Fig. 16 arbeitet nach dem Prinzip eines Linearmotors, bei dem die Schiene 17 ein Stator und die Wagen 15 Läufer sein bzw. als solche angesehen werden können. Nicht gezeigt in Fig. 16 ist eine vorhandene Steuerung, die komplexe Steuerungsaufgaben wahrnimmt, etwa Steuerung der einzelnen Wagen (Geschwindigkeit, Position, Bewegungsrichtung), Kollisionsvermeidung usw. Für den Antrieb kann sie Elektromagnete bzw. Spulen des Linearmotors selektiv bestromen, etwa mittels PWM ("pulse width modulation"). Es kann hierbei Gleichspannung an- und abgeschaltet werden. Oder es kann ein Vierquadrantensteller verwendet werden, der die Bestromung eines Elektromagneten auch umkehren kann.

Die Steuerung kann nach Maßgabe vorhandener und ebenso nicht dargestellter Sensorik erfolgen, insbesondere z. B. Positionssensorik, die vorzugsweise in Echtzeit die Positionen der Läufer bzw. Wagen und womöglich auch deren Geschwindigkeit erfasst und diese Größen einer Steuerung zugänglich macht.

Gleich hier sei darauf hingewiesen, dass die Bewegungen von Stator und Läufer relativ zueinander stattfinden und insoweit Stator und Läufer a priori austauschbare Begriffe sind, je nachdem, wessen Bezugssystem man als statisch ansieht. Gleiches gilt sinngemäß für Schiene und Wagen.

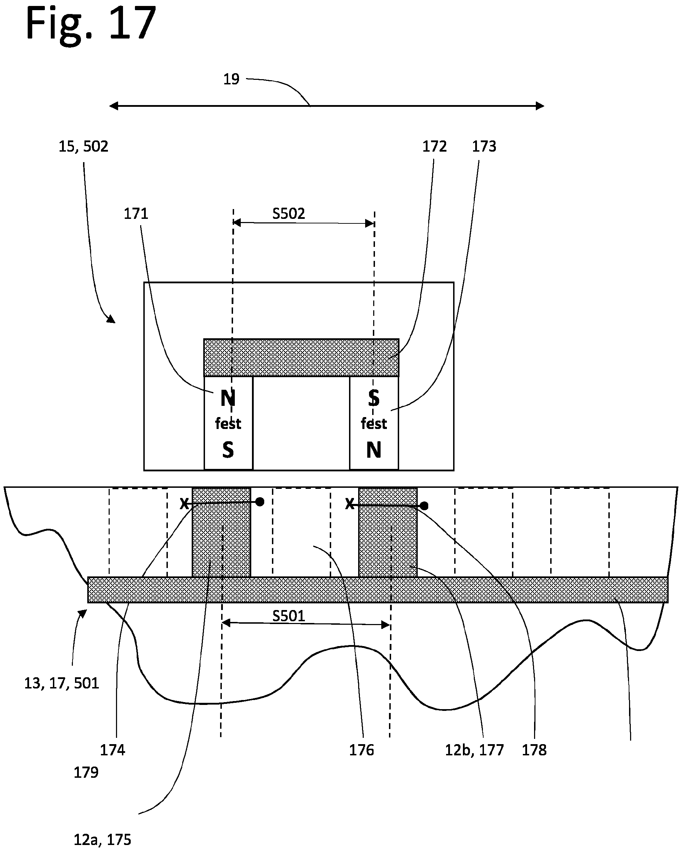

Fig. 17 zeigt ein Beispiel dafür, wie die elektromagnetische Auslegung sein kann. 15, 502 oben symbolisiert den Läufer 502 bzw. Wagen 15, der über der Schiene 13, 17 bzw. Stator 501 schwebend gezeichnet ist. In der Regel werden aber mechanische Verbindungen in Form von Rädern oder sonstigen Führungsmechanismen vorliegen, die Stator und Läufer bzw. Schiene und Wagen definiert zueinander führen. Pfeil 19 symbolisiert die Bewegungsrichtung des Wagens 15 relativ zur Schiene 13, 17. Sie ist links-rechts in Fig. 17 und kann in beide Richtungen gehen. Der Wagen 15 ist umgrenzt dargestellt, da er meistens eine relativ kleinere Einheit sein wird, während die Schiene 13, 17, 501 abgebrochen gezeichnet ist, da sie sich in Bewegungsrichtung mehr oder minder und theoretisch beliebig weit ausgedehnt erstrecken kann.

Der Läufer 502 kann zwei Magneten 171, 173 aufweisen, die in Bewegungsrichtung des Pfeils 19 voneinander um eine Schrittweite S502 beabstandet sind. Die Magnete können antiparallel orientiert sein, die Orientierungsrichtung kann senkrecht zur Grenzfläche zwischen Stator 501 und Läufer 502 sein. Ein Eisenkern 172 kann über den innenliegenden Enden der Dauermagneten 171, 173 liegen und einen weichmagnetischen Pfad zwischen ihnen herstellen.

Im Stator 501 sind längs Bewegungsrichtung 19 aneinandergereiht mehrere bzw. viele Elektromagneten 12a, 12b vorgesehen, die jeweils einen Eisenkern 175, 177 und eine Elektromagnetwicklung bzw. Spule 174, 178 darauf aufweisen. Nur zwei von ihnen sind ausführlicher gezeichnet. Die übrigen sind gestrichelt angedeutet und können genauso ausgelegt sein. Für den konventionellen Antrieb können zwei oder mehrere in Bewegungsrichtung beabstandete Elektromagneten zeitweise bestromt werden, während die übrigen Elektromagneten unbestromt bleiben. Mit der Fahrt des Läufers 502 bzw. Wagens 15 ändern sich demnach auch die jeweils momentan zu bestromenden Spulen. Die Steuerung weist hierfür ggf. eine Auswahleinrichtung auf.

Die Schrittweite S501 zwischen bestromten Elektromagneten kann anders sein als die Schrittweite S502 zwischen den Permanentmagneten des Läufers. Insbesondere kann sie etwas größer oder etwas kleiner sein, z. B. weniger als +/- 20 oder +/- 10 oder +/-5% von S502. Angedeutet in Fig. 17 ist eine gleichsinnige Bestromung zweier Spulen, wobei abermals angemerkt wird, dass mehr als zwei Spulen bestromt sein können. Es ergibt sich dann eine Mischung aus anziehenden und abstoßenden Magnetkräften, die zu einer definierten Bewegung des Läufers führen. Die Bestromung der Elektromagneten kann pulsbreitenmoduliert sein. Die Pulsfrequenz wird in der Regel deutlich höher liegen als die Frequenz, mit der der Läufer Elektromagneten 12 des Stators passiert, so dass während der Passage eines Elektromagneten viele PWM-Impulse eingesteuert werden.

Wünschenswert ist es, eine Kommunikationsmöglichkeit zwischen Stator und Läufer bzw. Schiene und Wagen zu haben. Die Kommunikation ist in beide Richtungen wünschenswert, also sowohl vom Wagen bzw. Läufer zur Schiene bzw. Stator als auch umgekehrt, z. B. um an Arbeitsstationen 18 anfänglich Informationen vom Läufer 502 her auslesen und zuletzt dort auch einschreiben zu können.

Das Transportsystem der Fig. 16 kann beispielsweise Arbeitsstationen 18 einer Fertigungsstraße sequenziell abfahren. Die Wagen 15 tragen bspw. mehr oder minder weit gefertigte Produkte. Der Wagen selbst kann dann z. B. individuelle Information zum jeweils getragenen Produkt mit sich führen, die beispielsweise bei einer Arbeitsstation eingeschrieben und bei einer nächsten Station ausgelesen werden kann. Mit Bezugsziffer 18 sind einzelne dieser Arbeitsstationen in Fig. 16 symbolisiert.

Bekannt ist es, eine induktiv und/oder sonstige magnetische Effekte nutzende Positionserfassung vorzusehen. Die Wagen 15 können einen Dauermagneten 16 fest mit sich führen, der zusammen mit dem Wagen 15 an entsprechenden induktiven Aufnehmern vorbeifährt, die läng der Schiene 17 angebracht sind. Auf diese Weise kann die Bewegung eines Wagens verfolgt werden. Es kann aber nicht kommuniziert werden. Auch bekannt ist es, separate Kommunikationssysteme zwischen Wagen 15 und Schiene 17 vorzusehen, die Information drahtlos in die gewünschte Richtung transportieren. Nachteil dieser bekannten Systeme ist es, dass sie aufwändig separat installiert werden müssen.

Aufgabe der Erfindung ist es, Einrichtungen und Verfahren für die Kommunikation zwischen relativ zueinander beweglichen Komponenten eines Multi-Carrier-Systems, eines Linearmotors oder eines Transportsystems anzugeben, die vergleichsweise einfach und mit keinen oder möglichst wenigen zusätzlich vorzusehenden Hardware-Komponenten auskommen bzw. die wenigstens teilweise sowieso vorhandene Hardware nützen können.

Diese Aufgabe wird mit den Merkmalen der unabhängigen Patentansprüche gelöst.

### A. Kommunikation vom Läufer bzw. Wagen zur Schiene bzw. zum Stator

Nachfolgend ab B. werden Merkmale der Kommunikation von Schiene bzw. Stator zum Läufer bzw. Wagen beschrieben. Kombinierbar sind sie mit den folgenden Merkmalen der Kommunikation von Läufer bzw. Wagen zum Stator bzw. zur Schiene, die aber auch für sich alleine genommen werden können.

Es wird vorzugsweise ein bekannter Positionsgeber-Sender fortgebildet bzw. um einige wenige Komponenten erweitert. Er ist versehen mit einer ersten Magneteinrichtung, vorzugsweise einem Dauermagnet, einer an oder bei der ersten Magneteinrichtung befestigten einstellbaren zweiten Magneteinrichtung, die ein Elektromagnet sein kann, und einer Einstellvorrichtung für die zweite Magneteinrichtung, die dazu ausgelegt ist, die zweite Magneteinrichtung nach Maßgabe einer zu sendenden Information einzustellen. Sie kann eine vorzugsweise tastende Stromsteuerung für die zweite Magneteinrichtung bzw. den Elektromagneten aufweisen.

Die erste Magneteinrichtung kann der Magnet eines Positionsgeber-Senders sein, der der Positionsbestimmung bzw. Präsenzerkennung dient, wenn die erste Magneteinrichtung einen entsprechenden Empfänger bzw. Aufnehmer überfährt. Die zweite Magneteinrichtung kann ein das Magnetfeld der ersten Magneteinrichtung überlagerndes oder ersetzendes Magnetfeld erzeugen, das nach Maßgabe der zu sendenden Information moduliert wird.

Der Elektromagnet und die Stromsteuerung können dazu ausgelegt sein, ein Magnetfeld einer Feldstärke zu erzeugen, dessen Amplitude an einem zugeordneten Magnetfeld-Aufnehmer wenigstens 1 % oder 5% oder 10% oder 20% der Amplitude der Feldstärke der ersten Magneteinrichtung am zugeordneten Aufnehmer beträgt und/oder dessen Amplitude höchstens das 5- oder 2- oder 1-fache der Amplitude der Feldstärke der ersten Magneteinrichtung beträgt.

Wenn senderseitig die Magnetfelder geeignet, z. B. wie beschrieben, eingestellt werden, können sie empfänger- bzw. aufnehmerseitig empfangen und in ihren zwei Bedeutungen auseinandergehalten werden. Die eine Bedeutung ist die konventionelle Präsenz- und Positionserkennung, die durch ein konstantes Magnetfeld bzw. einen Gleichanteil eines sich ändernden Magnetfelds bewirkt werden kann. Die zweite Bedeutung ist die Informationsübermittlung vom Wagen bzw. Läufer zur Schiene bzw. zum Stator. Die gesendete Information ist in dem sich ändernden Anteil des empfängerseitig aufgenommenen Magnetfelds moduliert enthalten.

Die erste Magneteinrichtung kann ein Dauermagnet und die zweite ein Elektromagnet sein, dessen Wicklung um den Dauermagneten herum gewickelt ist oder bei oder in der Nähe der ersten Magneteinrichtung liegt, z. B. an ihr anliegt.

Der Positionsgeber-Sender kann eine induktiv Energie aufnehmende Energieversorgung aufweisen. Es kann sich um eine "power harvesting"-Energieversorgung handeln, die u.a. Streufelder des elektrischen Antriebs aufnimmt, in elektrische Größen wandelt, damit aufgenommene Energie speichert und zur Energieversorgung der Einrichtungen des Positionsgeber-Senders verwendet.

Allgemein kann der Positionsgeber-Sender eine mehr oder minder komplexe Schaltung aufweisen. Sie kann digital arbeiten und kann dementsprechend eingangsseitig einen oder mehrere Analog/Digital-Wandler aufweisen und ausgangsseitig einen oder mehrere Digital/Analog-Wandler. Es kann sich um einen Kleinprozessor oder um einen Kleinrechner handeln mit üblichen Komponenten wie CPU, Speicher, BUS etc. Die zu sendende Information kann positionsgeberseitig erzeugt oder aus einem Speicher ausgelesen werden. Eine Kodiervorrichtung erzeugt dann dementsprechend Ansteuersignale für die Einstellvorrichtung der zweiten Magneteinrichtung.

Der Positionsgeber-Sender kann einen Träger aufweisen, an dem die erste Magneteinrichtung und die zweite Magneteinrichtung befestigt sind. Der Träger wiederum kann an einem Linearmotor-Läufer oder Wagen eines Transportsystems befestigt oder befestigbar sein. Es können dann auch Komponenten verwendet werden, die an dem Linearmotor-Läufer oder Wagen sowieso vorhanden sind, etwa Energieversorgung, Rechenleistung oder Ähnliches.

Es kann auch die erste Magneteinrichtung als Elektromagnet ausgebildet sein und kann der gleiche Elektromagnet wie der der zweiten Magneteinrichtung sein. Die Auslegung kann dann so sein, dass bei ausschließlicher Positionsgabe die Ansteuerung anders ist als wenn auch Information übermittelt werden soll. Nachteil dieser Ausführungsform ist es, dass bei Stromversorgungsschwierigkeiten im Läufer bzw. Wagen möglicherweise keine Positionsgabe möglich ist, weil die erste Magneteinrichtung dann nicht bestromt werden kann.

Eine Steuerung des Positionsgeber-Senders kann einen Startzeitpunkt und/oder einen Endzeitpunkt für die Informationsübertragung bestimmen und/oder kann eine zu sendende Datenmenge bestimmen. Die erfolgreiche Datenübertragung erfordert es, dass gegenüber dem sendenden beweglichen Wagen bzw. Läufer ein geeigneter Aufnehmer liegt, was aber wegen der Beweglichkeit nicht immer der Fall sein muss. Es kann aber allgemein im System die Relativposition des Wagens/Läufers relativ zu einem geeigneten Aufnehmer bekannt sein, und der Startzeitpunkt kann nach Maßgabe dieser bekannten Relativposition und/oder ggf. weiterer Parameter wie etwa aufnehmbare Feldstärke und/oder Signal-Rausch-Abstand und/oder Geschwindigkeit o.ä. bestimmt werden.

Die Informationsübertragung wird deshalb vorzugsweise an die sich ändernde Empfangsmöglichkeit angeglichen, was die Festsetzung eines Startzeitpunkts umfassen kann, zu dem also der Wagen bzw. Läufer in den Bereich eines Aufnehmers gelangt, und auch die Festsetzung einer Datenmenge bzw. Endzeitpunkts der Datenübertragung. Die Datenmenge kann aber beispielsweise auch fest gesetzt sein und kann sich anhand von Systemparametern wie Maximalgeschwindigkeit, Datenkapazität des Kanals etc. bestimmen. Das Übertragungsende ergibt sich dann implizit aus Übertragungsbeginn plus Übertragungsdauer der gesetzten Datenmenge.

Eine Datenübertragung kann mehrfach wiederholt werden, um Fehler ggf. erkennen und womöglich eliminieren zu können.

Die Einstelleinrichtung für den Elektromagneten der zweiten Magneteinrichtung kann ein geeignetes Modulationsverfahren implementieren, um nach Maßgabe der zu sendenden Information die Bestromung der zweiten Magneteinrichtung zu steuern. Vorzugsweise ist die zu sendende Information eine seriell zu sendende digitale Information, die zum Sendezeitpunkt aus einem Speicher ausgelesen wird. Ein Modulationsverfahren hier kann die Amplitudenmodulation eines Spulenstroms, insbes. Wechselstroms, und dementsprechend eines erzeugten Magnetfelds, insbesondere eines Wechselmagnetfelds sein. Die Amplitude selbst kann die digitale Information tragen, zum Beispiel kann eine Amplitude eine digitale "1" bedeuten, eine andere Amplitude eine digitale "0". Oder die Amplitudenänderung kann die digitale Information tragen. Es kann zum Beispiel eine Manchester-Codierung verwendet werden.

Ein Linearmotor-Läufer kann mit dem wie vorstehend beschriebenen Positionsgeber-Sender versehen sein. Auch ein Wagen eines Transportsystems kann mit dem Positionsgeber-Sender wie beschrieben versehen sein. Das Transportsystem kann schienengestützt sein, muss es aber nicht. Der Wagen kann autonom fahrend sein und kann als solcher Stationen ansteuern, bei denen ein zum Positionsgeber-Sender komplementärer Positionsgeber-Empfänger vorhanden ist.

Ein Positionsgeber-Empfänger hat einen magnetisch bzw. induktiv arbeitenden Aufnehmer, der dazu ausgelegt ist, ein externes Magnetfeld, vorzugsweise eines Positionsgeber-Senders wie beschrieben, in elektrische Signale umzuwandeln. Der Aufnehmer kann ein HAL- oder AMR- oder TMR- oder GMR-Aufnehmer sein. Er kann ein vorzugsweise zweidimensional messender Hall-Aufnehmer sein oder einen solchen aufweisen. Der Empfänger hat auch eine Auswertevorrichtung, die dazu ausgelegt ist, die elektrischen Signale zu wandeln und aus ihnen eine erste Positionsinformation und gesendete zweite Information vorzugsweise als digital verarbeitbare Informationen zu extrahieren.

Der Positionsgeber-Empfänger ist komplementär zum beschriebenen Sender ausgebildet. Er dient einerseits der konventionellen Anwesenheits- bzw. Positionserfassung durch Aufnahme und ggf. Auswertung des von der ersten Magneteinrichtung erzeugten Magnetfelds. Er dient andererseits der Informationsaufnahme durch Aufnahme des von der zweiten Magneteinrichtung erzeugten Magnetfelds, das vorzugsweise ein überlagertes Wechselmagnetfeld ist, indem dieses Wechselmagnetfeld ins Elektrische gewandelt, geformt und ausgewertet wird, insbesondere demoduliert wird.

Die Auswertevorrichtung kann dazu ausgelegt sein, Signale von einem externen Dauermagnetfeld zu erkennen und dementsprechend eine erste digital verarbeitbare Information als Positionsinformation zu erzeugen, und Signale von einem externen Wechselmagnetfeld zu erkennen und dementsprechend eine zweite digital verarbeitbare Information entsprechend einer mit dem Wechselmagnetfeld gesendeten zweiten Information zu erzeugen.

Es wird in diesem Zusammenhang darauf hingewiesen, dass die Positionsinformation keine absolute Positionsinformation ist. Es handelt sich vielmehr um die Information darüber, dass die den Positionsgeber-Sender tragenden Komponente (Läufer, Wagen) am Ort des Aufnehmers anwesend ist. Zusammen mit anderen im System vorhandenen Informationen kann daraus die Position in einem virtuellen Modell des Systems ermittelt werden. Allerdings kann innerhalb des Erfassungsbereichs eines Aufnehmers eine gewisse Ortsauflösung der Position des Wagens/Läufers relativ zum Aufnehmer möglich sein, etwa anhand erfasster Magnetfeldstärken und/oder Magnetfeldrichtungen. Dies ist beispielsweise bei Hall-Aufnehmern möglich, die in voneinander verschiedenen und vorzugsweise zueinander orthogonalen Richtungen Hall-Spannungen detektieren.

Das vom Positionsgeber-Empfänger aufgenommene Magnetfeld, insbes. Wechselmagnetfeld wird in ein entsprechendes elektrisches Signal gewandelt. Dieses kann im Elektrischen entweder im Analogen oder im Digitalen weiterbearbeitet werden, um die ggf. im aufgenommenen Magnetfeld enthaltenen Informationen zu extrahieren. Es kann hier ein Vorgang stattfinden, der letztlich verglichen mit dem senderseitigen Vorgang rückwärts abläuft. Eine extrahierte und digital vorhandene Information kann dann gespeichert oder über eine Schnittstelle nach extern abgegeben werden.

Vorteil dieser Auslegung des Positionsgeber-Empfängers ist es, dass je nach Auslegung keine weiteren Hardware-Komponenten als bei bekannten Positionsgeber-Empfängern benötigt werden. Lediglich steuerungsseitig sind weitere Maßnahmen notwendig. Soweit dies computergestützt erfolgt, kann es sich um eine mit Software implementierbare Lösung handeln, sodass hardwareseitig keine Änderungen auf der Empfängerseite vorgenommen werden müssen. Auf der Senderseite sind die zusätzliche zweite Magneteinrichtung, in der Regel also ein Elektromagnet, und Einrichtungen für dessen gesteuerte Bestromung vorzusehen.

Ein Linearmotor-Stator eines schienengestützten Transportsystems hat einen Positionsgeber-Empfänger wie vorgehend beschrieben. Auch ein Schienensegment eines schienengestützten Transportsystems hat einen Positionsgeber-Empfänger wie vorstehend beschrieben. Ein Positionsgeber-System hat mindestens einen Positionsgeber-Sender wie vorstehend beschrieben und mindestens einen Positionsgeber-Empfänger wie vorstehend beschrieben.

Ein Linearmotor hat einen Linearmotor-Stator wie vorgehend beschrieben und einen Linearmotor-Läufer wie vorstehend beschrieben. Ein Transportsystem hat mindestens einen Wagen wie vorstehend beschrieben und mindestens ein Schienensegment wie vorstehend beschrieben.

### B. Kommunikation vom Stator bzw. von der Schiene zum Läufer bzw. Wagen

Eine Steuerungsvorrichtung zur Steuerung der Speisung von Elektromagneten eines elektrischen Antriebs, insbesondere eines Linearmotor-Stators, mit elektrischer Leistung hat eine Steuerung mit einer ersten Steuerungskomponente, die dazu ausgelegt ist, nach Maßgabe eines Antriebs-Sollwerts die Erzeugung erste PWM-Steuerungssignale zur Steuerung der Bestromung der Elektromagnete zu veranlassen, und mit einer zweiten Steuerungskomponente, die dazu ausgelegt ist, es nach Maßgabe einer zu übertragenden Information zu veranlassen, die Erzeugung der ersten PWM-Steuerungssignale in eine Erzeugung anderer zweiter PWM-Steuerungssignale abzuwandeln.

Zur Übermittlung von Information vom Stator bzw. von der Schiene zum Läufer bzw. Wagen werden also sowieso vorhandene Hardwaremechanismen genutzt, aber in ihrer Ansteuerung abgewandelt. Es kann dann stator- bzw. schienenseitig bestehende Hardware genutzt werden, ohne dass womöglich neue Komponenten hinzugefügt werden müssen, und Veränderungen sind vorrangig in der Steuerung notwendig, was die Ergänzung eines Steuerungsprogramms erforderlich machen kann.

Die Ansteuerung der Bestromung der Spulen der Elektromagneten kann mittels Pulsbreitenmodulation (PWM, "pulse width modulation") erfolgen. Es kann hierbei Gleichspannung an- und abgeschaltet werden. Oder es kann ein Vierquadrantensteller verwendet werden, der die Bestromung eines Elektromagneten auch umkehren kann.

Impulse in der PWM werden mit einer bestimmten Impulsfrequenz längs eines Zeitrasters erzeugt. Wenn für zwei Elektromagneten, die unabhängig ansteuerbar sind, jeweils eigene Ansteuerimpulse erzeugt werden, können diese im gleichen Zeitraster, also mit der gleichen Impulsfrequenz erzeugt werden. Sie können für zwei oder mehr unterschiedliche Elektromagneten in einstellbarer relativer Phasenlage zueinander erzeugt werden. Sieht man die Periodendauer entsprechend dem Vollkreis als eine Phase von 2π an, können für zwei zu bestromende Spulen zwei getrennte PWM-Signale mit einer festen relativen Phasenlage erzeugt werden, wenn keine Information übertragen werden soll, und mit einer nach Maßgabe einer zu sendenden Information veränderlichen relativen Phasenlage, wenn Information übertragen werden soll. Die feste relative Phasenlage kann 0 sein. Die veränderliche relative Phasenlage kann zwischen der o.g. festen relativen Phasenlage (z. B. 0) und einer anderen zweiten Phasenlage z. B. ungleich 0 liegen, letztere kann größer als π/2 sein und kann π sein. Allgemein kann die zweite relative Phasenlage gegenüber der festen relativen Phasenlage um mindestens π/4 oder π/3 oder π/2 oder 2π/3 oder 3π/4 verschoben sein.

Wenn drei oder mehr Spulen bestromt werden, können für die Informationsübertragung ihre Bestromungsphasen gruppenweise gesetzt werden, indem eine Gruppe von in Fahrrichtung vorne liegenden Spulen von Elektromagneten und eine Gruppe von in Fahrrichtung hinten liegenden Spulen von Elektromagneten gebildet wird, wobei dann z. B. die Bestromungsphase einer Gruppe nach Maßgabe der zu sendenden Information gesetzt wird und die Bestromungsphase der anderen Gruppe fest sein kann oder auch nach bestimmten Kriterien und womöglich sendeinformationsabhängig gewählt werden kann.

Auch bei gleichphasiger Ansteuerung aller Elektromagnete können sich Flusswechsel im Läufer/Wagen und dementsprechend induzierte Spannungen ergeben, die nicht notwendigerweise eine Informationsübertragung oder eine verschoben-phasige, insbesondere gegenphasige Ansteuerung von Spulen bzw. Spulengruppen bei der Informationsübertragung darstellen. Von gewünschter Informationsübertragung bzw. gewünscht verschoben-phasiger, insbesondere gegenphasiger Ansteuerung von Spulen bzw. Spulengruppen kann dies unterschieden werden, indem z. B. ein Schwellenwert abgefragt wird. Nur induzierte Spannungen über einem Spannungsschwellenwert werden als verschoben-phasige, insbesondere gegenphasige Ansteuerung von Spulen bzw. Spulengruppen gewertet. Der Spannungsschwellenwert kann über 5 oder 10 oder 20 oder 40% eines maximal möglichen Spannungswerts liegen. Er kann unter 60 oder 40 oder 20 oder 10% eines maximal möglichen Spannungswerts liegen. Stattdessen oder zusätzlich kann die Auswertung der induzierten Spannungen an einen vorher etwa anhand einer Startsequenz erkannten Beginn einer Informationsübertragung gekoppelt sein

Primär dienen die Impulse der Bestromung der Elektromagnete für den Antrieb des Läufers/Wagens relativ zum Stator/Schiene. Durch die wählbar bestrombaren Spulen ergibt sich im Läufer/Wagen ein dementsprechend wählbares und sich änderndes Magnetfeld, das sich einem womöglich durch Dauermagnete im Wagen gegebenen Konstantfeld überlagert und als Wechselfeld im Wagen induktiv erfassbar ist. Abhängig davon aber, wie die relative Phasenlage zweier oder mehrerer PWM-Signale zur Steuerung der Bestromung zweier oder mehrerer Elektromagnete ist, können sich empfängerseitig, also seitens des Läufers/Wagens, unterschiedliche überlagernde Magnetflüsse ergeben, die auswertbar sind und der Informationsübertragung dienen können. In einer Systemauslegung kann sich der empfängerseitig (wagenseitig, läuferseitig) ergebende überlagernde magnetische Fluss bei Phasengleichheit im Wesentlichen 0 bzw. klein und insbesondere kleiner als ein Schwellenwert sein, während er in einem anderen Fall, insbesondere bei einer maximal möglichen Phasenverschiebung von π, groß und insbesondere größer als der genannte oder ein anderer Schwellenwert sein kann. Dies kann zum einen zur Informationsübermittlung verwendet werden.

Die einstellbare relative Phasenverstimmung kann aber auch dem Energieübertrag vom Stator hin zum Läufer dienen, indem läuferseitig induktive Energieaufnahme entsprechend "power harvesting" betrieben wird.

Allgemeiner gesprochen kann also die Steuerung der relativen Phasenlage zweier oder mehrerer PWM-Ansteuerungen zweier oder mehrerer Elektromagnete eines Linearmotor-Stators für die Informationsübermittlung und ggf. auch für die Energieübermittlung verwendet werden.

Das Codierungsverfahren kann so gestaltet sein, dass eine bitweise serielle Übertragung erfolgt und dass eine relative Phasenlage, z. B. 0, für den einen von zwei digitalen Werten eines Bits, z. B. 0, gesetzt wird und dass die andere relative Phasenlage, z. B. π, für den anderen der zwei digitalen Werte des Bits, z. B. 1, gesetzt wird. Die jeweilige relative Phasenlage kann zur Übertragung eines Bits über eine, zwei, drei oder mehrere und vorzugsweise weniger als 20 oder 15 oder 10 PWM-Perioden jeweils konstant den gesetzten Wert halten.

Die zu sendende Information kann einem Speicher entnommen sein oder kann mehr oder minder ad hoc erzeugt werden bzw. worden sein.

Die Auslegung kann so sein, dass die zweite Steuerungskomponente nach Maßgabe der zu übertragenden Information aktiviert oder deaktiviert wird. Wenn sie deaktiviert ist, bleibt es bei der alleinigen Arbeit der ersten Steuerungskomponente zur herkömmlichen Bestromung der Elektromagnete für den Antrieb. Wenn sie dagegen aktiviert ist, kann eine Abwandlung wie beschrieben stattfinden.

Die Steuerung kann dazu ausgelegt sein, einen Startzeitpunkt und/oder einen Endzeitpunkt und/oder die zu übertragende Datenmenge für die Informationsübertragung zu bestimmen und die Informationsübertragung dementsprechend zu steuern.

Die Bestimmung des Beginns und des Endes des Bestromungszeitpunkts eines Elektromagneten kann sich schon beim herkömmlichen Betrieb ohne Informationsübertragung als Notwendigkeit ergeben. Wenn längs der Schiene viele Elektromagneten vorgesehen sind, beispielsweise mit einem Raster von zwei oder fünf Zentimetern, ist beim Fahren eines Wagens laufend zu entscheiden, welche Spulen momentan zu bestromen sind, um den Wagen anzutreiben oder zu bremsen. Es werden nicht alle Spulen gleichzeitig bestromt. Diese sich schon aus dem herkömmlichen Betrieb ergebende Bestromungswahl von Elektromagneten kann auch als Wahl für den Zeitpunkt der Energieübertragung hinreichend sein. Es können aber noch weitere Kriterien oder andere Kriterien berücksichtigt werden. Beispielsweise kann die Informationsübertragung einen vorbestimmten Zeitraum nach Beginn der Bestromung einer Spule für den Antrieb begonnen werden. Auch hier kann die zu übertragende Datenmenge vorbestimmt sein. Ein Übertragungsende ergibt sich dann implizit aus dem Übertragungsanfang und der Übertragungsdauer.

In der Steuerungsvorrichtung kann die erste Steuerungskomponente dazu ausgelegt sein, für zwei vorzugsweise in Bewegungsrichtung beabstandete Elektromagnete die Erzeugung erster PWM-Steuerungssignale in einer ersten relativen Phasenlage zueinander, vorzugsweise phasengleich, zu veranlassen, und die zweite Steuerungskomponente kann dazu ausgelegt sein, es zu veranlassen, die Erzeugung der ersten PWM-Steuerungssignale dahingehend in die Erzeugung zweiter PWM-Steuerungssignale für die zwei Elektromagnete abzuwandeln, dass sie in einer anderen zweiten relativen Phasenlage zueinander liegen, vorzugsweise gegenphasig. Im Betrieb ohne das Senden von Daten können die Impulsbreiten der gleichzeitig angesteuerten Elektromagnete unterschiedlich sein. Die zweite Steuerungskomponente kann dazu ausgelegt sein, im Sendebetrieb die Impulsbreiten der gleichzeitig angesteuerten Elektromagnete einander anzugleichen. Sie kann auch dazu ausgelegt sein, die Impulsbreiten der Impulse auf bestimmte Werte zu begrenzen, z. B. auf eine Grenze unter 55 oder 50 oder 45% der Zykluszeit.

Die erste Steuerungskomponente kann dazu ausgelegt sein, zwei oder mehrere erste PWM-Steuerungssignale für je einen der zwei oder mehreren in Bewegungsrichtung beabstandeten Elektromagnete in der ersten relativen Phasenlage zu erzeugen, wobei die Phasenverschiebung der ersten relativen Phasenlage der zwei ersten PWM-Steuerungssignale in etwa 0 betragen kann, z. B. im Betrag kleiner als π/4 oder π/6 sein kann, und es kann die zweite Steuerungskomponente dazu ausgelegt sein, zwei zweite PWM-Steuerungssignale für je einen der zwei Elektromagnete in der zweiten relativen Phasenlage zu erzeugen, wobei die Phasenverschiebung der zweiten relativen Phasenlage der zwei zweiten PWM-Steuerungssignale in etwa π betragen kann bzw. größer als π/4 oder π/3 oder π/2 oder 2π/3 sein kann .

Erste und zweite Steuerungskomponente können rein digitale Komponenten und somit softwareimplementierbar sein und können digitale Ausgangssignale liefern, die schlicht "an/aus" bedeuten können und/oder die eine D/A-Wandlung durchlaufen können und in geeigneter Weise einer Treiberschaltung für die Schalter für die Bestromung der Elektromagnete/Spulen zugeführt werden.

Die zweite Steuerungskomponente kann ganz oder teilweise der ersten Steuerungskomponente wahlweise nachschaltbar sein und kann dazu ausgelegt sein, eine Ausgabe der ersten Steuerungskomponente zu verändern, vorzugsweise die Verschiebung von PWM-Impulse auf der Zeitachse zu veranlassen.

Bei dieser Auslegung arbeitet die erste Steuerungskomponente fortlaufend, während die zweite in modulierender Art und Weise wahlweise nachgeschaltet wird oder nicht. Sie kann beispielsweise die von der ersten Steuerungskomponente erzeugten Steuerungsimpulse um π phasenverschieben bzw. dies veranlassen. Wenn sie nachgeschaltet ist, tut sie dies, während sie es nicht tut, wenn sie nicht nachgeschaltet ist. Die Nachschaltung kann dann wahlweise nach Maßgabe der zu sendenden Information erfolgen oder nicht.

Allgemein gesprochen kann bei diesen Systemauslegungen also die Impulsbreite nach Maßgabe eines Antriebssollwerts erzeugt werden, während die relative Phasenlage zweier einzelner PWM-Signale nach Maßgabe der zu übermittelnden Information einstellbar sein kann.

Die zweite Steuerungskomponente kann aber auch wahlweise statt der ersten Steuerungskomponente verwendbar sein und insbesondere zur PWM-Impulserzeugung die Verwendung eines zweiten Referenzsignals veranlassen, das gegenüber einem ersten Referenzsignal, dessen Verwendung die ersten Steuerungskomponente veranlasst, phasenverschoben ist.

Bei dieser Systemauslegung wird die zweite Steuerungskomponente wenigstens für einen Elektromagneten statt der ersten Steuerungskomponente verwendet. So kann beispielsweise die zweite Steuerungskomponente ein anderes Referenzsignal verwenden als die erste Steuerungskomponente, um die Impulse nach Maßgabe des Antriebssollwerts zu erzeugen. Es kann dann das andere Referenzsignal phasenverschoben sein. Wenn die erste Steuerungskomponente arbeitet, werden PWM-Impulse bezugnehmend auf das erste Referenzsignal erzeugt, während wenn die zweite Steuerungskomponente arbeitet, werden PWM-Impulse bezugnehmend auf das zweite Referenzsignal erzeugt und werden dementsprechend phasenverschoben erzeugt.

Die Steuerungsvorrichtung bzw. die Schaltungen und Hardware können allgemein eine oder mehrere der folgenden Konfigurationen aufweisen:
- PWM-Impulsfrequenz über 0,5 oder 1 oder 2 oder 5 oder 10 oder 20 kHz und/oder unter 1000 oder 500 oder 200 kHz oder 100 kHz,
- PWM als An/Aus-PWM oder mit Vierquadrantenstellung,
- Maximalgeschwindigkeit des Läufers/Wagens über 1 oder 2 oder 5 m/s, und/oder unter 10 oder 5 oder 2 m/s,
- Maximalgeschwindigkeit der eingesteuerten Wanderwelle: über 20 oder 50 oder 100 oder 200 oder 500 Elektromagnete pro Sekunde und/oder unter 1000 oder 500 oder 200 Elektromagnete pro Sekunde,
- Ermittlung der zu bestromenden Elektromagnete anhand einer Positionssensorik und/oder anhand einer Interpolation und/oder mit einem Beobachter,
- pro Wegmeter mehr als 5 oder 10 oder 20 oder 30 oder 50 und/oder weniger als 200 oder 100 oder 50 separat ansteuerbare Elektromagnete.

Ein Linearmotor-Stator hat eine sich in Antriebsrichtung erstreckenden Führungsschiene, mehrere in Antriebsrichtung beabstandete und an der Führungsschiene angeordnete Elektromagnete, Schaltvorrichtungen zum individuellen Einstellen der Bestromung der Elektromagnete, und eine Steuerungsvorrichtung wie vorstehend beschrieben zur Ansteuerung der Schaltvorrichtungen.

Ein Schienensegment eines schienengestützten Transportsystems, vorzugsweise wie zum Positionsgeber-Empfänger beschrieben, kann einen Linearmotor-Stator wie beschrieben aufweisen.

Ein Linearmotor-Läufer hat Rollen zum Abrollen auf einer sich in Antriebsrichtung erstreckenden Führungsschiene, einen oder zwei oder mehrere Magnete, vorzugsweise Dauermagnete, einen damit verbundenen Eisenkern, der so angeordnet ist, dass er von einem von einem Linearmotor-Stator erzeugten Magnetfeld durchsetzt werden kann, eine um den Eisenkern gewickelte Aufnahmespule, die dazu ausgelegt ist, nach Maßgabe eines den Eisenkern durchsetzenden Magnetfelds induzierte elektrische Größen zu erzeugen, und eine mit der Aufnahmespule verbundene Schaltung, die dazu ausgelegt ist, die induzierten elektrischen Größen aufzunehmen, umzuformen und zu speichern.

Die Schaltung kann dazu ausgelegt ist, die den induzierten elektrischen Größen inhärente elektrische Energie aufzunehmen, umzuformen und zu speichern. Die Schaltung kann auch dazu ausgelegt sein, die den induzierten elektrischen Größen entnehmbaren und Informationen tragenden elektrischen Signale aufzunehmen, umzuformen, vorzugsweise in digitale Signale, und zu speichern, vorzugsweise in einem digitalen Speicher.

Der Linearmotor-Läufer kann allgemein gesprochen funktional komplementär zum Linearmotor-Stator wie beschrieben ausgebildet sein. Eine oder mehrere Aufnahmespulen dienen der Aufnahme des den Eisenkern durchsetzenden magnetischen Flusses, der, wie vorgehend beschrieben, statorseitig einstellbar ist und dem Energie- und Informationsübertrag dienen kann. In der Aufnahmespule bewirkt der Fluss die Induktion elektrischer Größen, insbesondere Strom und Spannung, die aufgenommen, gewandelt, ggf. decodiert bzw. demoduliert und gespeichert werden können. Die Speicherung kann die Speicherung geernteter Energie und/oder die Speicherung decodierter Information bedeuten.

Die Schaltung kann dazu ausgelegt sein, den Beginn der Informationsübertragung zu erkennen und ab dann die aufgenommenen elektrischen Größen entsprechend auszuwerten und übertragene Information zu speichern.

Der Wagen eines Transportsystems, der wie bezugnehmend auf den Positionsgeber-Sender beschrieben ausgebildet sein kann, kann mit einem Linearmotor-Läufer wie vorstehend beschrieben für die Informationsaufnahme vom Linearmotor-Stator her versehen sein. Ein Linearmotor kann einen Linearmotor-Stator wie beschrieben und einen Linearmotor-Läufer wie beschrieben aufweisen. Ein Linearmotor-Stator kann die Merkmale der Informationsübertragung vom Läufer zum Stator und der Informationsübertragung vom Stator zum Läufer aufweisen. Ein Linearmotor-Läufer kann die Merkmale der Informationsübertragung vom Läufer zum Stator und der Informationsübertragung vom Stator zum Läufer aufweisen.

Ein Datenträger kann darauf gespeicherte ausführbare Programme aufweisen. Die Programme sind so ausgelegt, dass sie beim Laufen eine Steuerungseinrichtung am bzw. für den Stator implementieren, der für die beschriebene Informationsübermittlung vom Stator bzw. von der Schiene zum Läufer bzw. Wagen ausgelegt ist.

In allgemeiner Form sind die Begriffe "Läufer" bzw. "Wagen" als Angabe einer relativen Beweglichkeit gegenüber einem Stator bzw. einer Schiene zu verstehen. Sie können auch dahingehend verstanden werden, dass damit eine absolute Beweglichkeit angesprochen sein soll, die gegenüber einem feststehenden Koordinatensystem, etwa einer Fertigungshalle oder Ähnlichem, gegeben ist. Die Verhältnisse können aber auch umgekehrt sein. Es kann der beschriebene Läufer bzw. Wagen absolut feststehend sein und es können relativ dazu und dann auch absolut der Stator bzw. die Schiene beweglich sein. Oder es können die konstruktiven Merkmale umgekehrt vorgesehen sein: Der Wagen bzw. Läufer weist zwei getrennt in ihrer Bestromung ansteuerbare Spulen bzw. Elektromagnete auf, mit denen Information vom Läufer zum Stator gesendet werden kann, während der Stator eine Vielzahl von längs der Bewegungsrichtung angeordnete Permanentmagnete aufweist. Gleichzeitig kann statorseitig eine Sendespule entsprechend der zweiten Magneteinrichtung vorgesehen, um Information vom Stator zum Läufer übertragen zu können.

### C. Allgemein Merkmale

Es kann eine Positionserfassungsvorrichtung für eine lokal relative und/oder global absolute Positionserfassung eines Läufers/Wagens relativ zu Stator/Schiene vorgesehen sein, die mit den vorstehend und nachfolgend beschriebenen Komponenten zusammenwirken kann. Sie kann dergestalt vorgesehen sein, dass die Position eines Läufers/Wagens relativ zu Stator/Schiene zeitweise bzw. stellenweise oder ständig bekannt ist. Die Position kann sensorisch erfasst sein und kann ggf. interpoliert sein. Sie kann stellenweise oder ständig mit einer

Ortsauflösungsgenauigkeit unter einem Schwellenwert bekannt sein. Die Positionserfassungsvorrichtung kann Teil eines Wagens, Läufers, Stators oder Schiene sein. Oder ein Wagen, Läufer, Stator oder Schiene können eine Schnittstelle zu einer solchen Positionserfassungsvorrichtung aufweisen, um entsprechende Positionsinformation zu erhalten.

Die Positionserfassungsvorrichtung kann mehrere längs Stator/Schiene angebrachte Positionsgeber-Empfänger vorzugsweise wie oben und nachfolgend beschrieben aufweisen, die für das Zusammenwirken mit einem Positionsgeber-Sender vorzugsweise wie oben und nachfolgend beschrieben an einem Läufer/Wagen ausgelegt sind.

Die Positionsgeber-Empfänger können für die lokal relativ ortsauflösende Positionsbestimmung eines Wagens ausgelegt sein. Sie können auch mit einer zentralen Steuerung verbunden sein, die Signale von den angeschlossenen Positionsgeber-Empfängern empfängt und daraus die absolute Position im Gesamtsystem bestimmt. Nicht alle Positionsgeber-Empfänger müssen für den Empfang zu sendender Informationen ausgelegt sein.

Ein Positionsgeber-Empfänger kann für die innerhalb des Erfassungsbereichs ortsauflösende Anwesenheitsdetektion eines Positionsgeber-Senders ausgelegt sein. Der Positionsgeber-Empfänger kann z. B. die Magnetfeldrichtung eines Magnetfelds von einer ersten Magneteinrichtung eines Positionsgeber-Senders erfassen und auswerten. Der Positionsgeber-Empfänger kann hierfür z. B. einen Hall-Aufnehmer aufweisen, der in voneinander verschiedenen und vorzugsweise zueinander orthogonalen Richtungen Hall-Spannungen detektiert, daraus die Richtung eines durchsetzenden Magnetfelds und daraus die Richtung zum Magneten und daraus dessen Position bestimmen können.

Es können entsprechende Positionsgeber-Empfänger so längs Schiene/Stator verteilt sein, dass ihre jeweiligen Erfassungsbereiche aneinander angrenzen und auch überlappen. Dann kann die Position des Wagens/Läufers lückenlos sensorisch erfasst werden.

Die Positionsermittlung eines Läufers/Wagens längs Stator/Schiene kann aber auch eine Kombination aus punktueller Detektion z. B. wie oben beschrieben und dazwischen rechnerischer Interpolation der sich ändernden Position x anhand bekannter Geschwindigkeit v und der verstreichenden Zeit t mit x=v*t umfassen.

Es kann so je nach Systemauslegung Information vom Läufer zum Stator und/oder umgekehrt übertragen werden.

### D. Figurenaufzählung

Nachfolgend werden bezugnehmend auf die Zeichnungen Ausführungsformen der Erfindung beschrieben, es zeigen:
- Fig. 1: schematisch Aspekte der Erfindung in Kombination,
- Fig. 2: schematisch eine Ausführungsform eines Stators bzw. einer Schiene,
- Fig. 3: schematisch eine Ausführungsform eines Läufers bzw. Wagens,
- Fig. 4: schematisch eine Ausführungsform eines Positionsgebersystems,
- Fig. 5: schematisch die Ausführungsform einer Steuerung des Positionsgeber-Senders,
- Fig. 6: eine Ausführungsform der Steuerung des Positionsgeber-Empfängers,
- Fig. 7: schematisch Darstellungen zu Sendeschema und zur Codierung beim Positionsgeber-Sender,
- Fig. 8: schematisch ein System zum Informations- und Energieübertrag vom Stator bzw. der Schiene zum Läufer bzw. Wagen,
- Fig. 9: schematisch die Steuerung seitens des Stators bzw. der Schiene,
- Fig. 10: ein Ansteuerschema für Statorspulen,
- Fig. 11: schematisch eine Ausführungsform zur Spulenansteuerung,
- Fig. 12: schematisch die Steuerung seitens des Informationsempfängers im Läufer/Wagen,
- Fig. 13: verschiedene Strom- und Spannungsverläufe,
- Fig. 14: Effekte durch die Spulenbestromung,
- Fig. 15: simulierte Strom- und Spannungswerte,
- Fig. 16: ein bekanntes Transportsystem, und
- Fig. 17: eine bekannte elektromagnetische Ausgestaltung eines Linearmotorsystems.

### E. Allgemeine Merkmale

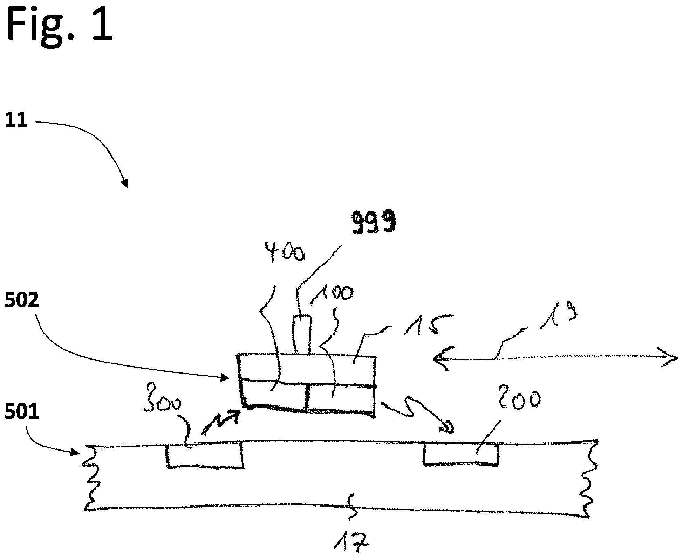

Fig. 1 zeigt schematisch in Kombination Merkmale für die Informationsübertragung vom Wagen 15 bzw. Läufer 502 hin zur Schiene 17 bzw. Stator 501, und Merkmale für die Informationsübertragung in umgekehrte Richtung. Allgemein kann es sich um ein Multi-Carrier-System handeln, bei dem mehrere Läufer vorzugsweise unabhängig voneinander ansteuerbar und längs eines Fahrwegs, verfahrbar sind. Carrier und Fahrweg können technisch ausgedrückt einen Linearmotor mit einem sich in Transportrichtung erstreckenden, optional zu einer Schleife geschlossenen Stator und mehreren längs dem Stator laufenden Läufern bilden. Es kann sich allgemeiner auch um ein schienengebundenes Transportsystem 11 mit einer vorzugsweise zu einer Schleife geschlossenen Schiene 17 und mehreren verfahrbaren Wagen 15 daran bzw. darauf handeln. Läufer bzw. Carrier bzw. Wagen können die schematisch gezeigte Arbeitsstationen 18 anfahren und verlassen.

11 ist allgemein ein Transportsystem, bei dem 17 eine längliche Schiene und 15 ein längs der Schiene laufender Wagen 15 sind. Mit Pfeil 19 ist die Bewegungsrichtung angedeutet, mit der der Wagen 15 relativ zur Schiene 17 verfahrbar ist, sie ist links-rechts in Fig. 1, in beide Richtungen. Mit 999 ist ein vom Wagen 15 transportierter Gegenstand als Transportgut angedeutet.

100 deutet einen Positionsgeber-Sender am Wagen 15 an, 200 einen Positionsgeber-Empfänger an der Schiene 17 bzw. Stator 501, die in Kombination zum Informationsübertrag vom Wagen 15 bzw. Läufer 502 zur Schiene 17 bzw. Stator 501 verwendet werden können. Es können längs Stator 501 bzw. Schiene 17 mehrere Positionsgeber-Empfänger 200 vorgesehen sein, von denen nicht alle für den Informationsempfang ausgelegt sein müssen.

300 deutet einen Informationssender an der Schiene 17 bzw. Stator 501 an, 400 einen Empfänger am Wagen 15 bzw. Läufer 502, die zusammen für den Informationsübertrag von Schiene 17 bzw. Stator 501 zu Wagen 15 bzw. Läufer 502 verwendet werden können. Längs Schiene 17 bzw. Stator 501 können mehrere Informationssender 300 vorgesehen sein, die jeweils eine bestimmte Strecke abdecken.

Nicht gezeigt ist eine womöglich vorhandene zentrale Steuerung, mit der die lokalen Komponenten, insbesondere Positionsgeber-Empfänger 200 und ein InformationsSender 300, in geeigneter Weise verbunden sein können, auch um ggf. in Echtzeit Informationen austauschen zu können. Die Verbindung kann leitungsgebunden oder drahtlos sein.

Die zentrale Steuerung kann dazu ausgelegt sein, Informationen von einem Positionsgeber-Empfänger 200 zu empfangen, die auch Informationen über einen und von einem Wagen/Läufer 15, 502 enthalten können. Die zentrale Steuerung kann dazu ausgelegt sein, Informationen an einen Informationssender 300 zu senden, die auch an einen Wagen/Läufer 15, 502 weiterzuleitende Informationen enthalten können. Die zentrale Steuerung kann auch dazu ausgelegt sein, aus mehreren möglichen Informationssender 300 einen bestimmten als Informationsempfänger auszuwählen, etwa nach Maßgabe einer Positionsinformation betreffend einen Wagen/Läufer 15, 502.

Die bisherigen Angaben sind in dem Sinn schematisch zu verstehen, dass sie keine zwingenden Aussage über die genauere Verteilung und Anzahl von Komponenten im Wagen/Läufer bzw. Schiene/Stator bedeuten sollen. Die Merkmale für die Informationsübertragung in die beiden entgegengesetzten Richtungen können kombiniert miteinander oder jeweils separat voneinander vorgesehen sein.

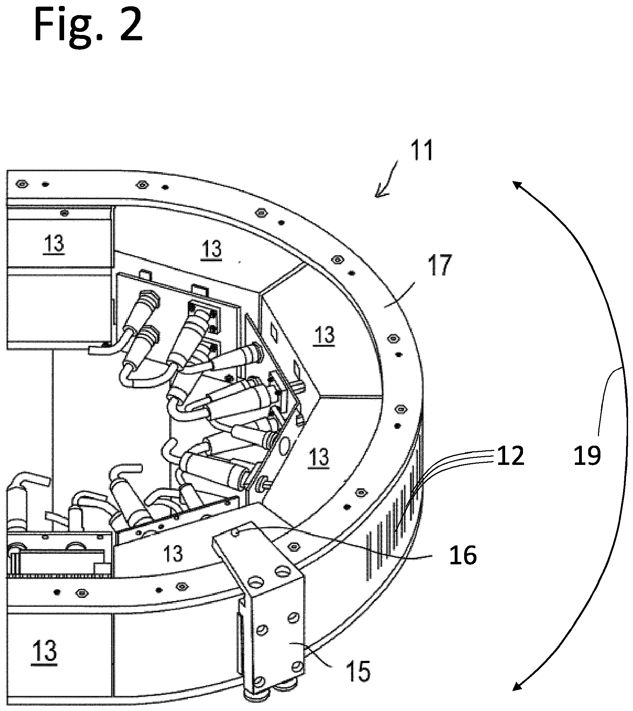

Fig. 2 ist eine Zeichnung eines Abschnitts eines Transportsystems 11. 15 ist ein Wagen, der längs der kurvig gezeichneten Schiene 17 verfahrbar ist. 12 bezeichnet viele Elektromagneten, die in Fahrrichtung verteilt angebracht sind. Beispielsweise können pro Meter Fahrweg mehr als 10 oder 20 oder 50 oder 100 und/oder weniger als 200 oder 100 oder 80 oder 50 Elektromagnete vorgesehen sein, die jeweils individuell ansteuerbar sind. Mit 13 sind Module angedeutet, die jeweils eine Gruppe von Elektromagneten samt Ansteuerung halten. Allgemein gesprochen kann die Ansteuerung der vielen Elektromagnete modular erfolgen. Der Wagen 15 läuft längs der Schiene 17. Er kann wie beschrieben ausgestaltet sein. Die Ansteuerung der Spulen 12 kann wie beschrieben ausgestaltet sein. 19 deutet wieder die Bewegungsrichtung des Wagens 15 längs der Schiene 17 an. 16 deutet eine erste Magneteinrichtung 101 als Dauermagnet eines Positionsgeber-Senders 100 an.

Nicht gezeigt sind ein oder mehrere Positionsgeber-Empfänger 200, die längs der Schiene 17 angebracht sein können, beispielsweise regelmäßig beabstandet, und die mit dem Positionsgeber-Senders 100 bzw. dem Dauermagneten 16 zusammenwirken. Ein oder mehrere Positionsgeber-Empfänger 200 sind dabei längs der Schiene 17 so angebracht, dass der Positionsgeber-Senders 100 bei seiner Bewegung mit dem Wagen 15 bzw. Läufer 502 den oder die Positionsgeber-Empfängern 200 mit geringem Abstand, beispielsweise kleine 5 oder 2 mm, passiert, so dass der Positionsgeber-Empfänger 200 das Magnetfeld vom Positionsgeber-Senders 100 her erfassen und auswerten kann.

Der Positionsgeber-Empfänger 200 kann einen Hall-Aufnehmer aufweisen. Der Hall-Aufnehmer kann dazu ausgelegt sein, in voneinander verschiedenen und vorzugsweise zueinander orthogonalen Richtungen Hall-Spannungen zu detektieren und aus den so ermittelten Spannungswerten die Richtung eines Magnetfelds von einer ersten und/oder zweiten Magneteinrichtung 101, 1002 eines Positionsgeber-Senders 100 zu erfassen. Aus der Richtung des Magnetfelds kann die Richtung zum Magneten und daraus dessen Position bzw. die Position des Wagens/ Läufers 15, 502 bestimmen werden.

Der Abstand von bzw. die Schrittweite zwischen aufeinander folgenden Positionsgeber-Empfängern 200 längs Schiene/Stator 17, 501 kann regelmäßig sein und kann unter 20 oder 10 oder 5 oder 2 cm liegen. Der Erfassungsbereich eines Positionsgeber-Empfängers 200 längs Schiene/Stator 17, 501 kann über 2 oder 5 oder 10 cm liegen. Er kann unter 50 oder 20 oder 10 cm liegen. Der Erfassungsbereich eines Positionsgeber-Empfängers 200 längs Schiene/Stator 17, 501 kann über 50 oder 100 oder 110 oder 120 oder 150% der Schrittweite zwischen aufeinander folgenden Positionsgeber-Empfängern 200 längs Schiene/Stator 17, 501 sein.

Es kann eine Positionserfassungsvorrichtung für eine lokal relative und/oder global absolute Positionserfassung eines Läufers/Wagens relativ zu Stator/Schiene oder im Transportsystem vorgesehen sein, die mit den vorstehend und folgend beschriebenen Positionsgeber-Sender 100 und Positionsgeber-Empfänger 200 zusammenwirken kann. Die Genauigkeit der Ortsauflösung der Positionserfassung kann stellenweise, insbesondere im Bereich von Positionsgeber-Empfängern 200 bzw. Informationssendern 300, oder im Gesamtsystem unter 10 oder 5 oder 2 oder 1 oder 0,5 oder 0,2 oder 0,1 mm liegen.

Eine Positionserfassungsvorrichtung insbesondere wie beschrieben kann Teil eines Wagens 15 und/oder Läufers 502 und/oder Stators 501 und/oder Schiene 17 und/oder Positionsgeber-Senders 100 und/oder Positionsgeber-Empfängers 200 und/oder Informationssenders 300 und/oder Informationsempfängers 400 sein. Oder ein Wagen 15 und/oder Läufer 502 und/oder Stator 501 und/oder Schiene 17 und/oder Positionsgeber-Sender 100 und/oder Positionsgeber-Empfänger 200 und/oder Informationssender 300 und/oder Informationsempfängers 400 bzw. deren Steuerungskomponenten können eine Schnittstelle zu einer solchen Positionserfassungsvorrichtung aufweisen, um positionserfassungsrelevante Daten senden zu können und/oder um Positionsinformationen empfangen zu können. Die ermittelten oder über ein Schnittstelle empfangenen Positionsinformationen können die oben genannte Genauigkeit der Ortsauflösung aufweisen.

Die so bekannte relative oder absolute Position eines Wagens/Läufers 15, 502 relativ zu Schiene/Stator 17, 501 oder im Gesamtsystem kann für verschiedene Zwecke verwendet werden, insbesondere für einen oder mehrere der folgenden Zwecke:
- Bestimmung des Sendebeginns für einen Positionsgeber-Sender 100,
- Bestimmung des Sendeendes für einen Positionsgeber-Sender 100,
- Bestimmung des Empfangsbeginns bzw. Decodierbeginns für einen Positionsgeber-Empfänger 200,
- Bestimmung des Sendebeginns für eine Datensendung von Schiene/Stator 17, 501 zu Wagen/Läufer 15, 502,
- Bestimmung des Sendeendes für eine Datensendung von Schiene/Stator 17, 501 zu Wagen/Läufer 15, 502,
- Bestimmung des Empfangsbeginns bzw. Decodierbeginns in einem Wagen/Läufer 15, 502,
- Bestimmung der für das Datensenden verwendeten Stator-Spulen 12,
- Bestimmung der für den Vortrieb verwendeten Stator-Spulen 12,
- allgemeine Funktionen.

Die Bestimmungen über Sendebeginn, Decodierbeginn und Sendebeendigung könnn in einer stationären Komponente getroffen werden, insbesondere in einer nicht gezeigten zentralen Steuerung oder in einem Positionsgeber-Empfänger 200. Soweit die Bestimmungen im Wagen/Läufer benötigt werden, können sie diesem durch einen geeigneten Mechanismus mitgeteilt werden. Auch möglich ist es, im Wagen/Läufer eine kontinuierlich laufende Dekodierung empfangener Signale vorzusehen, die dann z. B. auch nach einer bestimmten Startsequenz als eine Anzeige für eine sich anschließende Datenübertragung suchen kann.

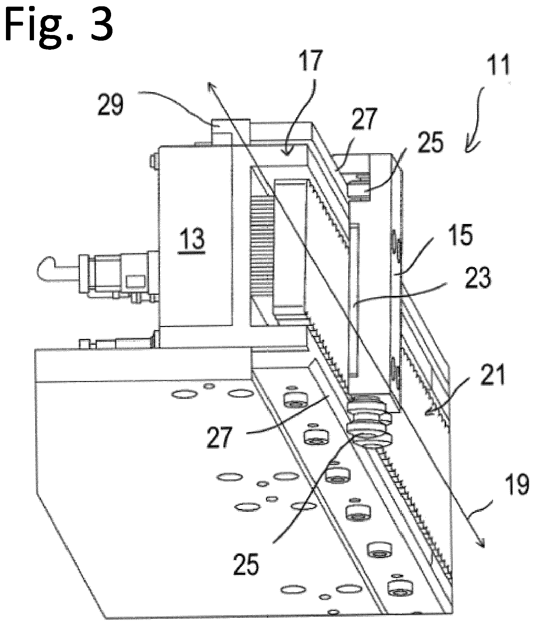

Fig. 3 zeigt etwas genauer eine mögliche Ausführungsform des Wagens 15. Er weist kräftige Dauermagnete 23 wie in Fig. 17 unter Ziffern 171 und 173 beschrieben auf, die ihn in seitlicher Richtung fest an die Schiene 17 ziehen. Räder 25 dienen dann auch dem seitlichen Kraftauffang, halten aber auch den Wagen gegen die Schwerkraft. Die Räder 25 weisen Nuten auf, mit denen sie auf der Schiene 17 laufen.

### F. Kommunikation vom Läufer/Wagen 502/15 zu Stator/Schiene 501/17

Nachfolgend ab G. werden Merkmale der Kommunikation von Schiene bzw. Stator zum Läufer bzw. Wagen beschrieben. Kombinierbar sind sie mit den folgenden Merkmalen der Kommunikation von Läufer bzw. Wagen zum Stator bzw. zur Schiene, die aber auch für sich alleine genommen werden können.

Ein Positionsgeber-System 100, 200 hat einen Positionsgeber-Sender 100 und einen Positionsgeber-Empfänger 200. In der gezeigten Ausführungsform ist der Positionsgeber-Sender 100 mit dem Läufer 502 des Linearmotors bzw. Wagen 15 des Transportsystems verbunden und der Positionsgeber-Empfänger 200 mit der Schiene 17 bzw. Stator 501. Die Verhältnisse können aber auch umgekehrt sein.

Der Positionsgeber-Sender 100 weist einen konventionellen Magneten 101, 16 auf, der eine erste Magneteinrichtung bildet. Es kann ein Dauermagnet sein. Er ist so angebracht, dass er bei Verwendung und Bewegung des Läufers 502 in geringem Abstand am Stator 501 bzw. Positionsgeber-Empfänger 200 entlangläuft, so dass stator- bzw. schienenseitige Komponenten das Magnetfeld von der ersten Magneteinrichtung 501 erfassen können.

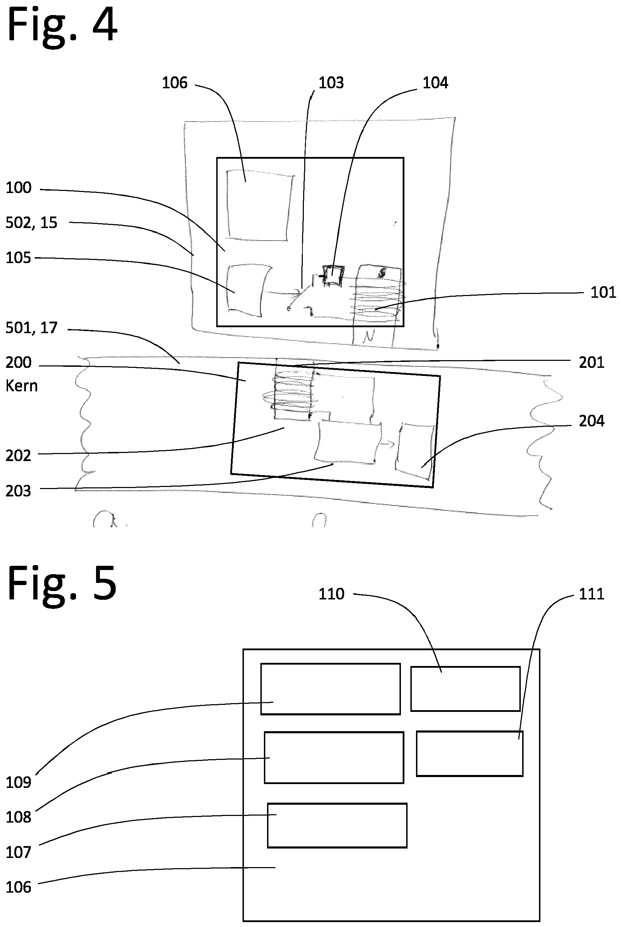

Der Positionsgeber-Sender 100 weist eine zweite Magneteinrichtung 102 auf. Sie ist einstellbar. Es kann sich um einen Elektromagneten handeln. Er kann um die erste Magneteinrichtung 101, insbesondere den Dauermagneten, herum gewickelt sein oder bei ihr oder in ihrer Nähe angebracht sein. Fig. 4 zeigt eine Ausführungsform, bei der die Einstellung der zweiten Magneteinrichtung durch wahlweises An- und Ausschalten des Elektromagneten erfolgt. Es kann aber auch eine veränderliche Bestromung vorgesehen sein, die nicht vollständig ausschaltet. Hierfür vorgesehen ist eine Energieversorgung 104, die eine Gleichstromquelle sein kann, etwa eine Batterie oder ein Kondensator, und ein Schalter 103 zum An- und Ausschalten der Energieversorgung des Elektromagneten 102, der dann ein getastetes bzw. veränderliches Magnetfeld erzeugt, das sich dem Magnetfeld von der ersten Magneteinrichtung 101 her überlagern kann . Der Dauermagnet der ersten Magneteinrichtung 101 kann ein Stabmagnet sein, dessen Längsrichtung auf den Empfänger zu gerichtet sein kann, bspw. mit seinem Südpol oder wie gezeigt mit seinem Nordpol.

Der Schalter 103 wird von einem Treiber 105 betätigt. Der Schalter 103 kann ein Leistungs-Halbleiter sein, etwa ein FET, MOSFET oder Ähnliches. Die Treiberschaltung 105 kann hierfür geeignete Ansteuersignale erzeugen. Die Treiberschaltung 105 empfängt ihrerseits Steuerungssignale von einer Steuerung 106. Die Steuerung 106 kann digitale Komponenten aufweisen. Sie kann einen Kleinrechner aufweisen mit Komponenten wie CPU, RAM, BUS, Schnittstelle, Festwertspeicher und Ähnlichen. Analog/Digital- und Digital/Analog-Wandler können nach Notwendigkeit vorhanden sein. Bei der Steuerung 106 kann es sich um einen ASIC oder um ein FPGA handeln.

Fig. 4 zeigt in ihrem unteren Teil einen Stator 501 bzw. Schiene 17. Sie kann sich längs Bewegungsrichtung erstrecken, die in Fig. 4 als links-rechts angenommen ist. 200 symbolisiert einen lokal vorhandenen, stationären Positionsgeber-Empfänger mit einem Eisenkern 201, einer Induktionsspule 202 oder einem Hall-Sensor, einer Wandlungsschaltung 203 und einer Auswerteschaltung 204. Im Betrieb, d. h. bei Fahrt des Wagens 15 längs der Schiene 17, fährt der Wagen 15 mit dem Positionsgeber-Sender 100 über den Positionsgeber-Empfänger 200 an der Schiene 17 hinweg. Die Magneteinrichtungen 101, 102 des Positionsgeber-Senders gelangen dabei mehr oder minder langdauernd, abhängig auch von der Fahrgeschwindigkeit des Wagens, in den Erfassungsbereich des Positionsgeber-Empfängers mit Kern 201 und Induktionsspule 202. Einerseits die Positionserfassung und andererseits die Datenübertragung bzw. Informationsübertragung kann in dieser Zeitdauer und angepasst an diese Zeitdauer erfolgen.

Die vom Wagen 15 bzw. Läufer 502 weg hin zu Schiene 17 bzw. Stator 501 zu übertragende Information kann regelmäßig beispielsweise eine ID des Wagens umfassen, die diesem vorzugsweise fest eingeschrieben ist, sodass der Empfänger regelmäßig auch Information darüber enthält, von welchem Individuum aus gesendet wird. Eindeutige Identitätsdaten ID können einem Speicherbereich des Speichers 110 der Steuerung 106 des Positionsgeber-Senders 100 eingeschrieben sein. Sie kann auch von einer früher angefahrenen Station 18 eingeschriebene Information umfassen, die an einer später angefahrenen Station 18 ausgelesen wird.

Die Steuerung 106 ist in Fig. 5 ausführlicher mit funktionalen Komponenten dargestellt. Quellen für die zu sendende Information bzw. Daten können ein interner Speicher 110 für vorher intern generierte Daten oder eine Schnittstelle 111 sein, denen ein Codierer bzw. Modulierer 108 Daten zum Senden entnehmen kann. Der Speicher 110 kann RAM und/oder ROM und/oder Register umfassen, insbesondere eine Speicherstelle für eindeutige Identitätsdaten. Die Daten können digital bitweise vorliegen. Der Codierer codiert die Daten in geeigneter Weise und erzeugt Signale zur Ansteuerung der Treiberschaltung 105. Dies kann im Digitalen erfolgen und kann eine nachfolgende Digital/Analog-Wandlung durchlaufen.

109 symbolisiert einen Startgeber bzw. Zeitgeber für das Senden. Der Zeitgeber 109 legt einen Startzeitpunkt für die Datenübertragung mittels der zweiten Magneteinrichtung 102 fest. Wie gesagt hängt die Datenübertragungsfähigkeit auch davon ab, dass sich der Positionsgeber-Sender 100 im Erfassungsbereich des Positionsgeber-Empfängers 200 befindet. Die Zeitgeber-Schaltung 109 kann dies anhand bestimmter Kriterien feststellen, etwa Beobachtung des Signals von der ersten Magneteinrichtung, anhand bekannter Positionen, Interpolation anhand der Fahrgeschwindigkeit und Ähnlichem. Sie kann einen Startzeitpunkt und einen Endzeitpunkt für die Datenübertragung bestimmen. Sie kann auch eine bestimmte zu übertragende Datenmenge bestimmen, für die das zur Verfügung stehende Übertragungszeitfenster ausreichend lang ist. Es kann andererseits aber auch die zu sendende Datenmenge vorbestimmt sein, etwa anhand von Systemparametern, die eine Mindestverweildauer eines Positionsgeber-Senders bei einem Positionsgeber-Empfänger bestimmen, ermittelbar etwa anhand der Höchstgeschwindigkeit, Erfassungsbereich usw. Die Zeitgeberschaltung 109 kann dann womöglich nur einen Startzeitpunkt für den Beginn der Datenübertragung festlegen.

107 ist eine Leistungssteuerungsschaltung, die nötigenfalls Funktionen der Leistungsaufnahme und Leistungsspeicherung steuert. Sie kann "power harvesting" steuern, ist aber nur vorgesehen, wenn dies nötig ist und nicht Leistung zum Betrieb der Steuerung 106 und des Elektromagneten 102 sowieso vorhanden ist.

Die zweite Magneteinrichtung 102 kann so angeordnet sein, dass sich ihr einstellbares Magnetfeld, vorzugsweise ein Wechselmagnetfeld, dem Magnetfeld von der ersten Magneteinrichtung 101 her überlagert. Die mit der zweiten Magneteinrichtung 102 einstellbare Magnetfeldänderung ist so dimensioniert, dass sie mit hinreichender Sicherheit vom Gleichanteil von der ersten Magneteinrichtung 101 her unterschieden werden kann. Die Einstellung kann so sein, dass beim empfangenden Gegenüber, also z. B. dem Kern 201, die Magnetfeldstärke von der zweiten Magneteinrichtung 102, also regelmäßig dem Elektromagneten, her mindestens 2 % oder 5 % oder 10 % oder 20 % der Amplitude der Feldstärke der ersten Magneteinrichtung sind. Nach oben kann sie auf das höchstens dreifache oder zweifache oder einfache der Amplitude der Magnetfeldstärke der ersten Magneteinrichtung begrenzt sein.

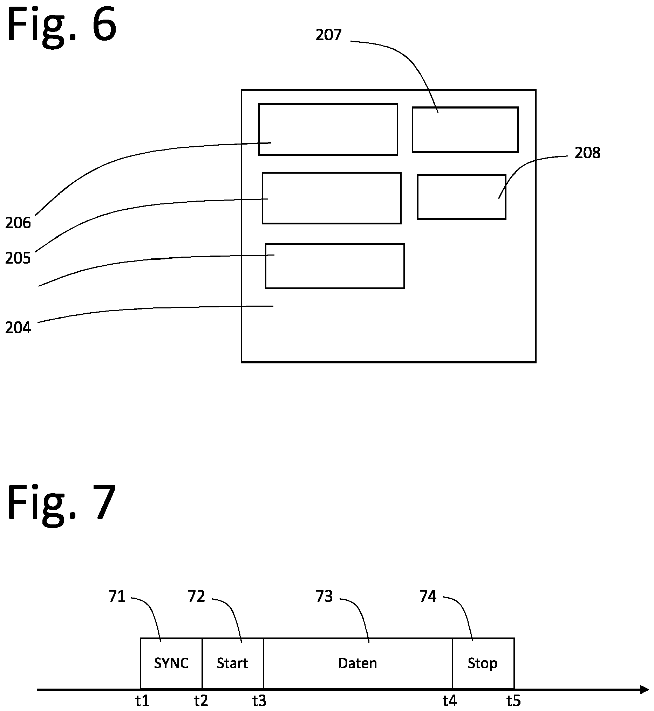

Fig. 6 zeigt schematisch Funktionen der Auswerteschaltung 204 des Positionsgeber-Empfängers 200. Die vorgelagerte Wandlungsschaltung 203 kann beispielsweise eine Gleichrichtung des induktiv aufgenommenen elektrischen Wechselsignals vornehmen und kann auch eine gewisse Glättung durchführen. Die Zeitkonstanten können dann so bestimmt sein, dass z. B. über Halbwellen hinweg geglättet wird, aber Modulationen nicht geglättet werden.

Die Auswerteschaltung 204 kann einen Zeitgeber 206 aufweisen, der das von der Wandlungsschaltung empfangene Signal beobachtet und unter verschiedenen Aspekten bewertet. Dies kann im Analogen oder - nach Analog/Digital-Wandlung des Signals von der Wandlungsschaltung 203 her - im Digitalen erfolgen. Es kann eine Schwellenwertüberprüfung stattfinden, um festzustellen, ob das Signal einen Schwellenwert überschreitet, der die Anwesenheit eines Wagens im Erfassungsbereich des Positionsgeber-Empfängers anzeigt. Das Signal kann weiterhin auf einen Gleichanteil hin untersucht werden. Das Signal kann auch auf einen eine Modulation anzeigenden veränderlichen Anteil hin untersucht werden. Wenn Letzterer festgestellt wird, kann es in einem Decodierer bzw. Demodulierer 205 decodiert werden, der zum Beispiel invers zum Codierer bzw. Modulierer 108 in der Positionsgeber-Sendeschaltung arbeiten kann. Es kann ein Speicher 208 mit RAM und/oder ROM und/oder Registern vorgesehen sein. Es kann ein Interface 208 zur Kommunikation mit anderen Komponenten vorgesehen sein.

Wenn der Decodierer bzw. Demodulierer 205 ein moduliertes Signal demoduliert, kann er das Ergebnis in einen internen Speicher 207 einschreiben und/oder über eine Schnittstelle 208 nach extern abgeben bzw. übertragen. Die Auswerteschaltung 204 kann wie die Steuerung 106 implementiert sein als Kleinrechner, ASIC, FPGA oder Ähnliches. Nach Notwendigkeit können A/D- und D/A-Wandler vorgesehen sein.

Fig. 7 zeigt beispielhaft ein senderseitig eingestelltes Sendeschema, das dann empfängerseitig auszuwerten und zu decodieren ist und das für die zu übertragende Information angewendet werden kann. t1 ist ein in geeigneter Weise bestimmter Startzeitpunkt, zu dem der Sender zu senden beginnt. Er kann, muss aber nicht, zunächst eine Sync-Folge 71 senden, die die zeitliche Synchronisation des Empfängers auf den Sender erlaubt. Bei t2 kann eine vorbestimmte Startsequenz 72 gesendet werden, die den Beginn der Datensendung 73 bei t3 bezeichnet. Nach der Datensendung kann bei t4 eine vorbestimmte Stopsequenz 74 gesendet werden.

Empfängerseitig kann die Sync-Folge 71 zum Einstellen der eigenen Zeitbasis auf die des Senders benützt werden. Die Startsequenz 72 kann demoduliert/dekodiert und auf Richtigkeit überprüft werden. Die Datensequenz 73 kann demoduliert/dekodiert und gespeichert werden. Die Stopsequenz 74 kann demoduliert/dekodiert und auf Richtigkeit überprüft werden.

Die Gesamt-Sendezeitdauer ist beim Schema der Fig. 7 t5 - t1. Sie kann fest vorbestimmt und so eingestellt sein, dass sie in jedem Fall kürzer ist als ein kürzestmögliches Sendefenster, das sich bei hohen Wagen- bzw. Läufergeschwindigkeiten ergeben kann. Die Datensendedauer ist t4 - t3. Sie korreliert mit der sendbaren Datenmenge. Auch sie kann vorbestimmt sein. Empfängerseitig kann auch überprüft werden, ob bspw. Startsequenz 72 und Stopsequenz 74 relativ zueinander zeitrichtig liegen. Das Datensenden 73 kann das wiederholte Senden, etwa zweimal oder dreimal) gleicher Daten umfassen, um Übertragungsfehler durch Vergleich der Wiederholungen wahrscheinlich erkennen und womöglich korrigieren zu können. Das Sendeschema kann das wiederholte Senden der zu sendenden Information umfassen, insgesamt z. b. zweimal oder dreimal.

Der Sender sendet vorzugsweise seriell bitweise eine digitale Information. Die Codierung kann eine Manchester-Codierung sein. Der Empfänger arbeitet komplementär zu Sender.

Der Sende-Startzeitpunkt kann nach Maßgabe einer im System bekannten Relativposition zwischen Sender und Empfänger und vorzugsweise weiterer Parameter wie etwa aufnehmbare Feldstärke und/oder Signal-Rausch-Abstand und/oder Geschwindigkeit o.ä. bestimmt werden.

Die Relativposition zwischen Sender und Empfänger kann nach Maßgabe von Positionssensorik 16, 100, 200 und/oder weiterer Informationen bestimmt werden. Diese Bestimmung kann die Interpolation einer einmal bekannten Position anhand Relativgeschwindigkeit und verstreichender Zeit umfassen.

Die Datensendedauer t4 - t3 kann auch einstellbar variabel sein, etwa nach Maßgabe der Wagengeschwindigkeit. Sie kann dann z. B. als Teil der Startsequenz 72 mitgeteilt werden. Die Datenrate kann über 100 oder 200 oder 500 oder 1000 bps (Bit pro Sekunde) liegen. Sie kann unter 10 oder 5 oder 2 oder 1 kbps liegen. Der Empfangs-Startzeitpunkt kann anhand einer empfangen Sync-Folge 71 und/oder Startsequenz 72 bestimmt werden.

Allgemein kann eine Steuerung vorhanden sein, die bestimmte Parameter, etwa statische Systemgeometrie und statische und dynamische Systemparameter kennt, insbesondere Abmessungen des Stators 501 bzw. der Schiene 17, Positionen der Positionsgeber-Empfänger, und die dementsprechend Geschwindigkeiten, Relativpositionen, Startzeitpunkte 71 und ggf. Datensendedauer t4 - t3 bestimmt. Diese Bestimmungen können senderseitig oder andernorts getroffen werden.

Die jenseits der Datenübertragung stattfindende Anwesenheitserkennung bzw. Positionsmessung anhand des Magnetfeld-Signals vom Positionsgeber-Sender 100 bzw. von der ersten Magneteinrichtung 101 her sagt a priori ja nur, dass sich die erste Magneteinrichtung 101 im Erfassungsbereich des Positionsgeber-Empfängers 200 befindet. Letzterem kann aber in seinem Speicher 207 beispielsweise eine Positionsangabe eben dieses Empfängers eingeschrieben sein, die dann der jeweiligen Anwesenheitsdetektion zugeordnet wird, wenn dies extern zum Positionsgeber-Empfänger von Interesse sein sollte. Es kann dann über das Interface 208 nach extern übertragen werden. Falls vorhanden, kann einer solchen Nachricht auch die Identitätsangabe ID des erfassten Wagens bzw. Läufers mitgegeben werden.

Ein Positionsgebersystem hat den Positionsgeber-Sender 100 wie beschrieben und den Positionsgeber-Empfänger 200 wie beschrieben. Für den Positionsgeber-Empfänger kann sowohl die Anwesenheits-Detektion entsprechend einer Positionsdetektion wie auch die Datenübertragung lokal von Interesse sein und dann lokal verwendet und weiterverarbeitet werden, und/oder sie kann extern von Interesse sein und dann in geeigneter Weise nach extern über Schnittstelle 208 abgegeben werden. Das Positionsgeber-System kann allgemein in einem Linearmotor mit Stator 501 und Läufer 502 angewendet werden, oder es kann allgemein in einem Transportsystem mit Wagen 15 und womöglich Schiene 17 angewendet werden. Das Transportsystem kann schienengestützt oder auch schienenunabhängig sein. Dementsprechend wird auch ein Linearmotor mit dem beschriebenen Positionsgeber-System und ein Transportsystem mit dem beschriebenen Positionsgeber-System als Teil der Erfindung angesehen.

Mögliche Merkmalskombinationen MK der Kommunikation vom Läufer/Wagen 502/15 zu Stator/Schiene 501/17 sind:
MK 1. Positionsgeber-Sender (100) mit
   einer ersten Magneteinrichtung (16, 101), vorzugsweise einem Dauermagnet,
   einer an oder bei der ersten Magneteinrichtung befestigten einstellbaren zweiten Magneteinrichtung (102), die ein Elektromagnet sein kann, und
   einer Einstellvorrichtung (103-106) für die zweite Magneteinrichtung, die dazu ausgelegt ist, die Einstellung der zweiten Magneteinrichtung nach Maßgabe einer zu sendenden Information zu veranlassen oder vorzunehmen, und die eine Stromsteuerung (103-105) für den Elektromagneten aufweisen kann.
MK 2. Positionsgeber-Sender (100) nach MK 1, bei der
   der Elektromagnet und die Stromsteuerung dazu ausgelegt sind, ein Magnetfeld einer Feldstärke zu erzeugen, dessen Amplitude an einem zugeordneten Magnetfeld-Aufnehmer wenigstens 1 % oder 5% oder 10% oder 20% der Amplitude der Feldstärke der ersten Magneteinrichtung am zugeordneten Aufnehmer beträgt und/oder dessen Amplitude höchstens das 5- oder 2- oder 1-fache der Amplitude der Feldstärke der ersten Magneteinrichtung beträgt.
MK 3. Positionsgeber-Sender (100) nach MK 1 oder 2, bei der die erste Magneteinrichtung ein Dauermagnet ist und die zweite Magneteinrichtung ein Elektromagnet ist, dessen Spule um den Dauermagneten herum gewickelt ist.
MK 4. Positionsgeber-Sender (100) nach einer der vorherigen MKs, mit einer induktiv Energie aufnehmenden Energieversorgung.
MK 5. Positionsgeber-Sender (100) nach einer der vorherigen MKs, mit
   einer vorzugsweise digitalen Informationserzeugungsvorrichtung (110, 111) zum Bereitstellen einer zu sendenden Information, und
   einer Codiervorrichtung (108), die dazu ausgelegt ist, nach Maßgabe der bereitgestellten Information Signale für die Einstellvorrichtung zu erzeugen.
MK 6. Positionsgeber-Sender nach einer der vorherigen MKs, mit
   einem Träger, an dem die erste Magneteinrichtung und die zweite Magneteinrichtung befestigt sind, wobei der Träger an einem Linearmotor-Läufer (502) oder Wagen (15) eines Transportsystems befestigbar ist.
MK 7. Positionsgeber-Sender (100) nach MK 1, bei der die erste Magneteinrichtung und die zweite Magneteinrichtung einen Elektromagneten aufweisen, vorzugsweise den gleichen, wobei die Einstellvorrichtung (103-106) dazu ausgelegt ist, die zweite Magneteinrichtung beim Senden der zu sendenden Information anders einzustellen als ohne das Senden von Information, insbesondere so, dass ohne das Senden von Information kein Feld oder ein Gleichfeld und beim Senden von Information ein sich nach Maßgabe der zu sendenden Information änderndes Feld eingestellt wird.
MK 8. Positionsgeber-Sender (100) nach einer der vorherigen MKs, bei der die Steuerung (106) einen Zeitgeber (109) aufweist, der dazu ausgelegt ist, einen Startzeitpunkt und/oder einen Endzeitpunkt und/oder die zu übertragende Datenmenge für die Informationsübertragung zu bestimmen und die Informationsübertragung dementsprechend zu steuern.
MK 9. Positionsgeber-Sender (100) nach einer der vorherigen MKs, bei dem die zweite Magneteinrichtung ein Elektromagnet ist und die Einstelleinrichtung eine Schalteinrichtung aufweist, vorzugsweise einen oder mehrere HalbleiterLeistungsschalter, die dazu ausgelegt ist, den Elektromagneten nach Maßgabe einer zu sendenden digitalen Information an- und auszuschalten.
MK 10. Positionsgeber-Sender (100) nach einer der vorherigen MKs, mit einer oder mehreren der folgenden Auslegungen:
   Modulationsverfahren: Amplitudenmodulation eines Wechselfeldes, Manchaster-Code
   Schaltfrequenz der Einstelleinrichtung größer 100 oder 200 oder 500 Hz und/oder kleiner als 20 oder 10 oder 5 oder 2 kHz.
MK 11. Linearmotor-Läufer (502) eines Linearmotors, mit einem Positionsgeber-Sender (100) nach einer der vorherigen MKs.
MK 12. Wagen (15) eines vorzugsweise schienengestützten Transportsystems mit einem Positionsgeber-Sender (100) nach einer der MKs 1 bis 10.
MK 13. Positionsgeber-Empfänger (200) mit
   einem induktiv arbeitenden oder den Hall-Effekt nützenden Aufnehmer (201, 202), der dazu ausgelegt ist, ein externes Magnetfeld, vorzugsweise eines Positionsgeber-Senders (100) nach einer der vorherigen MKs, in elektrische Signale umzuwandeln, und
   einer Auswertevorrichtung (203), die dazu ausgelegt ist, die elektrischen Signale zu wandeln und aus ihnen eine erste Positionsinformation und gesendete zweite Information als digital verarbeitbare Informationen zu extrahieren.
MK 14. Positionsgeber-Empfänger (200) nach MK 13, bei der die Auswertevorrichtung dazu ausgelegt ist, Signale von einem externen Dauermagnetfeld zu erkennen und dementsprechend eine erste digital verarbeitbare Information als Positionsinformation zu erzeugen, und Signale von einem externen Wechselmagnetfeld zu erkennen und dementsprechend eine zweite digital verarbeitbare Information entsprechend einer mit dem Wechselmagnetfeld gesendeten zweiten Information zu erzeugen.
MK 15. Linearmotor-Stator (501) eines schienengestützten Transportsystems (11) mit einem Positionsgeber-Empfänger (200) nach einer der MKs 13 oder 14.
MK 16. Schiene (13, 17) eines schienengestützten Transportsystems (11) mit einem Positionsgeber-Empfänger (200) nach einer der MKs 13 oder 14.
MK 17. Positionsgeber-System (100, 200) mit mindestens einem Positionsgeber-Sender (100) nach einer der MKs 1 bis 10 und mit mindestens einem Positionsgeber-Empfänger (200) nach MK 13 bis 14.
MK 18. Linearmotor (501, 502) mit einem Stator (501) nach MK 15 und mit einem Läufer (502) nach MK 11.
MK 19. Transportsystem (11) mit mindestens einem Wagen (15) nach MK 12 und einer Schiene nach MK 16.

### G. Datenübertragung vom Stator/Schiene 501/17 zum Läufer/Wagen 502/15

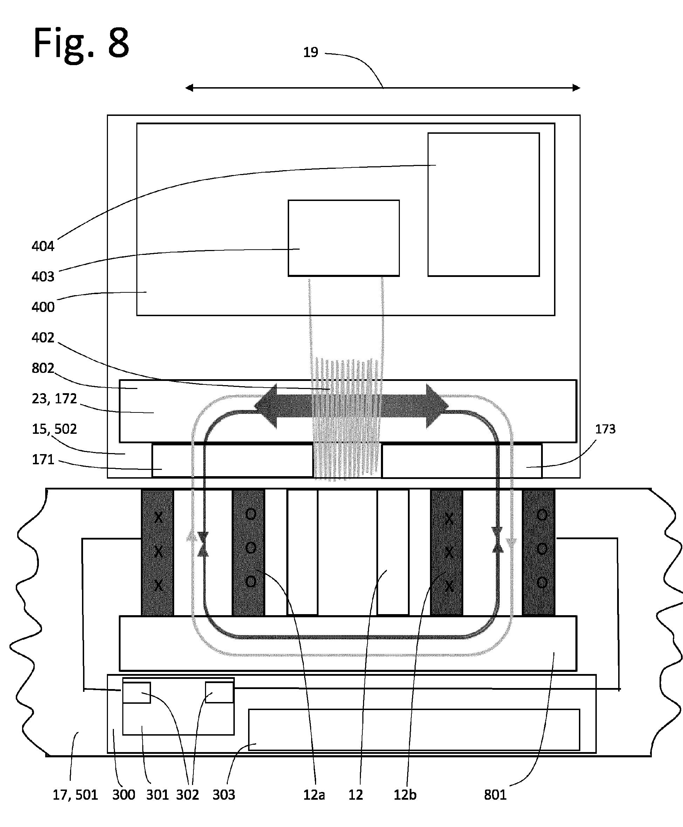

Fig. 8 zeigt ein System zur Datenübertragung von Schiene 17 bzw. Stator 501 zum Wagen 15 bzw. Läufer 502. Oben ist Wagen 15 symbolisiert, der sich links-rechts gemäß Pfeil 19 bewegen kann. Unten ist eine Schiene 17 abgebrochen angedeutet gezeigt. Die Schiene 17 weist eine in Fahrtrichtung 19 angeordnete Folge von Elektromagneten 12 auf, von denen allerdings in Fig. 8 nur drei gezeigt sind. Wie schon anhand Fig. 17 beschrieben, können in herkömmlicher Bestromung zwei oder mehrere von ihnen gleichzeitig bestromt werden, in Fig. 8 sind dies die Elektromagneten 12a und 12b. Zwischen ihnen können eine oder mehrere nicht bestromte Spule 12 liegen. Die Magneten 12 können mit ihrem vom Wagen 15 abgewandten Pol auf einem gemeinsamen Eisenkern 801 aufsitzen. Der Wagen weist die schon in Fig. 17 beschriebenen Dauermagneten 171, 173 und Eisenkern 172 auf. Um den Eisenkern 172 herum kann eine Erfassungsspule 402 gewickelt sein, deren Anschlüsse in eine Wandlungsschaltung 403 laufen. Deren Signal wiederum kann von einer Auswerteschaltung 404 weiterverarbeitet werden.

Der magnetische Kreis in Fig. 8 weist somit von oben im Uhrzeigersinn schauend den Kern 802 mit Erfassungsspule 402 darauf auf, Dauermagnet 173, Luftspalt, Spule bzw. Elektromagnet 12b, Kern 801, Spule bzw. Elektromagnet 12a, Luftspalt und Dauermagnet 171.

In Fig. 8 ist angenommen, dass der Sender 300 in Schiene 17 bzw. Stator 501 liegt, während im Wagen 15 bzw. Läufer 502 der Empfänger 400 liegt. Es kann aber auch umgekehrt sein. Der Sender 300 weist einen Schalterblock 301 zum individuellen Schalten der einzelnen Elektromagnete 12 auf. Hierzu sind jeweils individuell Schalter 302 vorgesehen, von denen nur zwei angedeutet sind. Die Schalter können Leistungshalbleiter wie schon weiter oben beschrieben sein. Sie können von einer nicht gezeigten Treiberschaltung her Ansteuersignale empfangen. Die Treiberschaltung wiederum kann Ansteuersignale von einer Steuerung 303 empfangen. Im Signalpfad kann an geeigneter Stelle eine Digital/Analog-Wandlung liegen, wenn man annimmt, dass die Steuerung 303 im Wesentlichen im Digitalen arbeitet.

Fig. 8 deutet zu den Spulen 12a und 12b durch eingetragene X und O an, dass die Spulen gleichsinnig bestromt werden. Wenn sie dann auch gleichzeitig bestromt werden, erzeugen sie gewünschte Vortriebskräfte für den Antrieb des Wagens 15 relativ zur Schiene 17 und erzeugen im magnetischen Kreis bestehend aus den Eisenkernen 801 und 172, den Magneten 12a und 12b und den Dauermagneten 171 und 173 gegenläufige Flüsse, die sich im Wesentlichen aufheben, wie durch die zwei gegensinnig aufeinander zu zeigenden Pfeile angedeutet. Die Aufnahmespule 402 wird dann kaum von einem sich ändernden magnetischen Fluss durchsetzt und wird dementsprechend kein Signal oder nur ein geringes Signal erzeugen.

Wenn andererseits nur eine der beiden Spulen 12a und 12b bestromt wird, momentan beispielsweise nur 12b, etwa indem beiden Spulen 12a und 12b alternierend bestromt werden, entsteht im genannten magnetischen Kreis eine Flussänderung, die von der Aufnahmespule 402 erfasst wird, indem sie in eine induzierte Spannung gewandelt wird.

Für den Antrieb insgesamt ist es für die Reduzierung von Verlusten im Eisenmaterial vorteilhaft, beide Spulen 12a und 12b quasi gleichzeitig zu bestromen. Sie können aber tatsächlich strikt gleichzeitig oder alternierend bestromt werden. Strikt gleichzeitige Bestromung kann hier auch umfassen, dass die Spulen unterschiedlich lange Impulse erhalten und deshalb auf der Zeitachse bereichsweise nicht überlappen. Wenn sie strikt gleichzeitig verwendet werden, erzeugen sie die sich gegenseitig aufhebenden Magnetflüsse. Wenn sie dagegen quasi gleichzeitig, nämlich alternierend verwendet werden, erzeugen sie jeweils Magnetflüsse, die von der Aufnahmespule 402 als markantes Signal aufgenommen werden können. Die Entscheidung, ob Spulen 12a und 12b strikt gleichzeitig oder alternierend bestromt werden, kann beim Senden von Daten nach Maßgabe einer zu übertragenden Information erfolgen. Es kann so digitale Information seriell bitweise gesendet werden. Die sonstigen Bestromungsparameter, insbesondere Impulsbreiten einer impulsbreitenmodulierten Bestromung der Spulen, können nach Maßgabe eines Antriebssollwerts gesetzt werden. Beim Senden von Daten können Impulsbreiten allerdings auf bestimmte Grenzen beschränkt werden, z. B. auf eine Grenze unter 50% der Zykluszeit. Dann ist sichergestellt, dass bei alternierender Bestromung keine sich kompensierende Flussüberlappung auftritt.

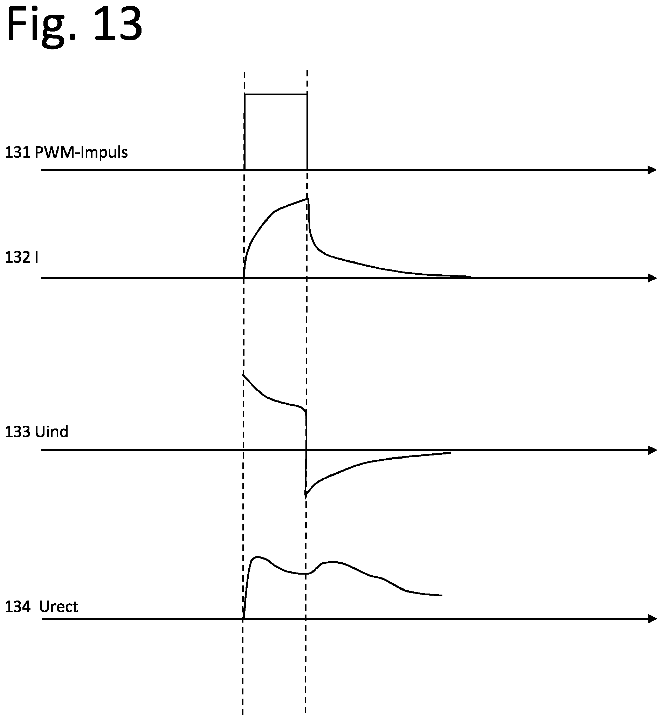

Fig. 13 zeigt allgemein einige Zeitverläufe. 131 sei ein einzelner PWM-Impuls, der über einen Treiber eine kurzzeitige Spulenbestromung einsteuert. Real werden dagegen PWM-Impulse periodisch folgen. 132 zeigt den Spulenstrom. Da Spulen Induktivitäten sind, wird der Strom nicht wie an einem Ohm'schen Widerstand unmittelbar der Spannung folgen, sondern entsprechend den herrschenden Zeitkonstanten über die Zeit exponentiell mit negativem Koeffizienten ansteigen und nach dem Abschalten über die Zeit abfallen. 132 zeigt qualitativ einen Spulenstrom in einem Elektromagneten 12 des Stators 501. 133 zeigt eine induzierte Spannung, die in einer anderen Spule durch einen Strom wie in 132 gezeigt hervorgerufen werden kann. Entsprechend dem Induktionsgesetz ist sie proportional zu dl/dt und hat somit einen qualitativen Verlauf wie in 133 gezeigt. Gleichgerichtet und moderat geglättet kann sich dann ein Verlauf wie in 134 gezeigt ergeben.

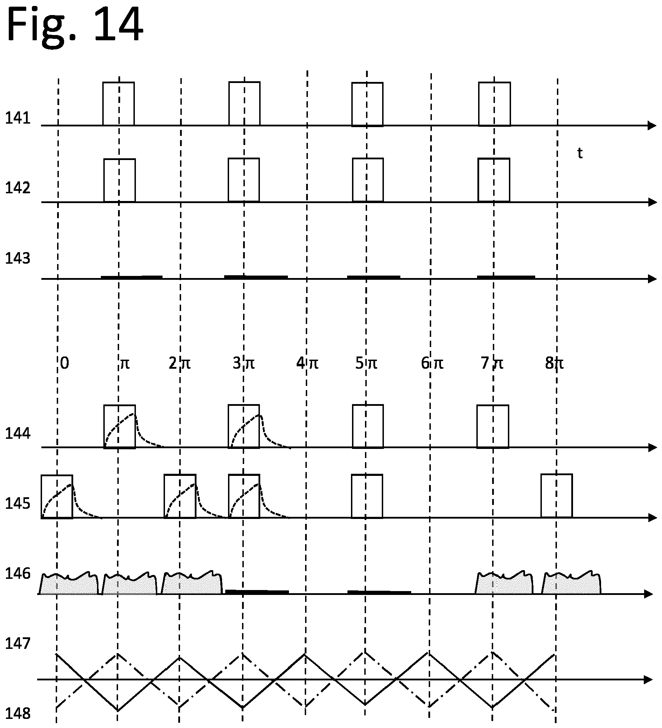

Fig. 14 zeigt verschiedene Zeitdiagramme. Diagramme 141 bis 143 nehmen den Fall strikt gleichzeitiger Bestromung der beiden Spulen bzw. Elektromagnete 12a und 12b an, während die Diagramme 144 bis 146 abwechselnd strikt gleichzeitige und alternierende Bestromung zeigen. Für den Fall strikter Gleichzeitigkeit der Bestromung der zwei Spulen zeigen 141 und 142 die PWM-Impulse für die beiden Spulen bzw. Elektromagnete 12a und 12b im Stator 501, und 143 zeigt die sich ergebende Induktion im Läufer 502. Für den Fall abwechselnd alternierender und strikt gleichzeitiger Bestromung der zwei Spulen zeigen 144 und 145 die PWM-Impulse für die beiden Spulen bzw. Elektromagnete 12a und 12b im Stator 501, und 146 zeigt die sich ergebende Induktion im Läufer 502. 144 und 145 zeigen gestrichelt auch exponentielle Verläufe jeweiliger Spulenströme im Stator.

Die Bestromung der Spulen kann mit impulsbreitenmodulierten Impulsen erfolgen. Diese Impulse werden mit einer Impulsfrequenz ausgegeben, die einer Periodendauer entsprechen. Die gestrichelten senkrechten Linien in Fig. 14 markieren jeweils halbe Periodendauern, liegen also, als Phase beschrieben, z. B. auf 0, π, 2π, 3π, ... In Fig. 14 ist angenommen, dass bei strikt gleichzeitiger Bestromung der Spulen 12a, 12b die Stromimpulse jeweils um π, 3π, 5π, 7π, ... herum liegen. Gezeigt ist ein Tastverhältnis von etwa 25 %. Das Tastverhältnis kann nach Maßgabe des Antriebssollwerts eingestellt werden.

Die gleichzeitigen Impulse 141 und 142 für die zwei Spulen 12a und 12b führen zu sich im Wesentlichen kompensierenden Flüssen, sodass in 143 die Aufnahmespule 402 allenfalls ein kleines Signal erzeugt, was durch kleine Balken in Diagramm 143 angedeutet sein soll.

In den Diagrammen 144 und 145 ist dagegen angenommen, dass bis Phase 2π die Impulse alternierend eingesteuert werden, sodass deren Flüsse sich nicht kompensieren. Sie führen deshalb zu höheren induzierten Spannungen in der Aufnahmespule 402, was in Diagramm 146 dargestellt ist. Zu Phasenlagen 3 π bis 6 π ist wieder gleichzeitige Bestromung bzw. Nicht-Bestromung angenommen, sodass sich dort Verhältnisse wie in den Diagrammen 141 bis 143 einstellen. Zu Phasenlagen 7 π und 8 π ist wieder alternierende Bestromung angenommen, sodass wieder wie schon vorher relativ hohe induzierte Spannungen entstehen.

Die alternierende bzw. strikt gleichzeitige Bestromung zweier Spulen bzw. Elektromagnete 12a, 12b kann in der Weise hervorgerufen werden, dass die Bestromung einer ersten Spule in einem konstanten Phasenraster und die der anderen zweiten in einem veränderlichen Phasenraster erfolgt. Die strikt gleichzeitige Bestromung kann zum Senden eines digitalen Werts, z. B. "0", einer zu sendenden Bitfolge verwendet werden, die alternierende Bestromung zum Senden des anderen digitalen Werts., z. B. "1". In Fig. 14 ist das konstante Phasenraster in den Zeitdiagrammen 141 und 144 gezeigt, angenommen etwa für Spule 12a, die ausnahmslos zu Perioden π, 3 π, 5 π, 7 π, allgemein π + 2nπ, bestromt wird. Für die andere zweite der beiden Elektromagnet-Spulen, beispielsweise 12b in Fig. 8, kann ein Umschalten vorgesehen sein. Diagramm 142 zeigt die Bestromung der zweiten Spule ohne Umschaltung, während Diagramm 145 die Bestromung der zweiten Spule mit Umschaltung der Phasenlage zeigt.

Bei strikt gleichzeitiger Bestromung erfolgt die Bestromung der zweiten Spule zur gleichen Phasenlage wie die Bestromung der ersten Spule 12a, gezeigt zu Phasenlagen 3 π und 5 π. Bei alternierender Bestromung der zweiten Spule wird dagegen auf eine andere Phasenlage umgeschaltet, gezeigt in Diagramm 145 zu Phasenlagen 0, 2 π und 8 π. Technisch kann dies beispielsweise dadurch geschehen, dass die Bestromung der einen Spule ausschließlich nach Maßgabe eines Referenzsignals, beispielsweise 147 in Fig. 14, gesteuert wird, während die Bestromung der anderen Spule wahlweise nach Maßgabe des einen Referenzsignals 147 oder eines dagegen phasenverschobenen zweiten Referenzsignals 148 erfolgt. Die Referenzsignale 147, 148 können tatsächlich erzeugt werden oder können als rechnerisches Abbild erzeugt werden.

Ein senderseitig eingestelltes Sendeschema kann wie zu Fig. 7 beschrieben gestaltet sein. Der Empfänger arbeitet entsprechend komplementär. Auch die sonst zu Fig. 7 vorgetragenen Merkmale können sender- und/oder empfängerseitig implementiert sein.

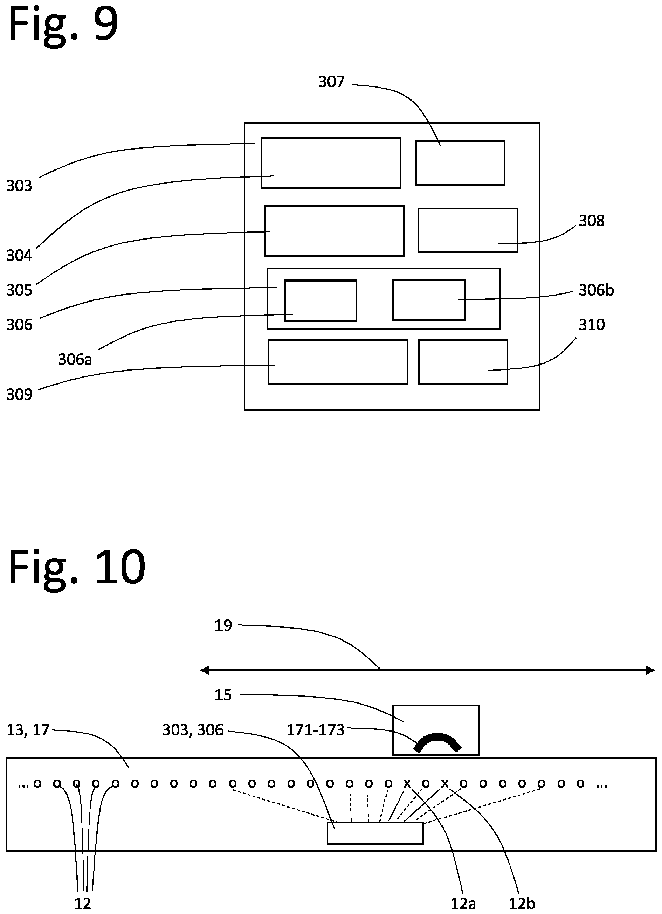

Fig. 9 zeigt schematisch die Steuerung 303 mit Funktionsblöcken darin. Sie kann einen Codierer bzw. Modulierer 305 aufweisen, der zu sendende Information aufnimmt, etwa aus einem Speicher 307 oder von einer Schnittstelle 310 her, und in geeigneter Weise codiert bzw. zur Modulation verwendet. Der Speicher 307 kann RAM und/oder ROM und/oder Register umfassen. 306 ist eine PWM-Schaltung, die die Ergebnisse der Codierschaltung 305 in PWM-Signale zur Ansteuerung der Elektromagneten des Stators 501 bzw. der Schiene 17 umsetzt. Die Impulsbreiten werden dabei nach Maßgabe eines Antriebssollwerts aus einer Antriebssteuerung 308 gesetzt.

Die PWM-Schaltung 306 weist eine erste Steuerungskomponente 306a und eine zweite Steuerungskomponente 306b auf. Die erste Steuerungskomponente 306a kann die strikt gleichzeitige Bestromung der beiden Elektromagneten 12a, 12b veranlassen, während die zweite Steuerungskomponente 306b die alternierende Bestromung der zwei Elektromagneten 12a, 12b veranlassen kann. Der Einsatz der zwei Steuerungskomponenten 306a und 306b wird nach Maßgabe der zu sendenden Information, also nach Maßgabe der Ausgabe des Codierers 305 gesteuert.

309 ist eine Spulenauswahlschaltung, die in konventioneller Weise die momentan zu bestromenden Spulen auswählt. Fig. 10 zeigt hierzu nähere Angaben. Wieder schematisch gezeigt sind Schiene 17 und Wagen 15, der gemäß Pfeil 19 in Links-rechts-Richtung längs der Schiene 17 verfahrbar ist. In Schiene 17 sind durch o und x viele vorzugsweise gleich gebaute Elektromagneten gezeigt, die wahlweise bestromt werden können oder auch nicht. Bestromt werden jeweils nur diejenigen, die in der Nähe des Wagens 15 liegen, sodass mit der Auswahlschaltung 309 eine Auswahl getroffen werden muss.

In Fig. 10 sind zwei gerade ausgewählte Spulen 12a und 12b mit einem x gekennzeichnet, während die übrigen, ansonsten gleich gebauten Spulen mit einem o gekennzeichnet sind. Alle sind wählbar, aber nur einige, vorzugsweise zwei, werden konkret gewählt. Die Wahl ändert sich gemäß der Fahrt des Wagens 15 auf der Schiene 17, und es gibt dementsprechend Verweildauern, während derer der Wagen 15 im Bereich eines momentan gewählten Paares von Elektromagneten ist.

304 in Fig. 9 ist ein womöglich notwendiger Zeitgeber, der einen Startzeitpunkt zum Senden von Information und womöglich auch einen Endzeitpunkt hierfür und/oder eine zu übertragende Datenmenge festsetzt. Dies kann sinngemäß wie wie oben zu Fig. 7 beschrieben geschehen. Soweit die Datenübertragung nicht über die Änderung der Wahl von zu bestromenden Elektromagneten 12 hinweg fortgesetzt werden kann, muss ein Startzeitpunkt und ggf. ein Endzeitpunkt für die Datenübertragung bestimmt werden. Dann kann innerhalb des gesetzten Zeitraums mit einem festen Paar von Elektromagneten die Datenübertragung erfolgen. Danach können andere Elektromagnete gewählt werden und ggf. erneut Daten übertragen werden.

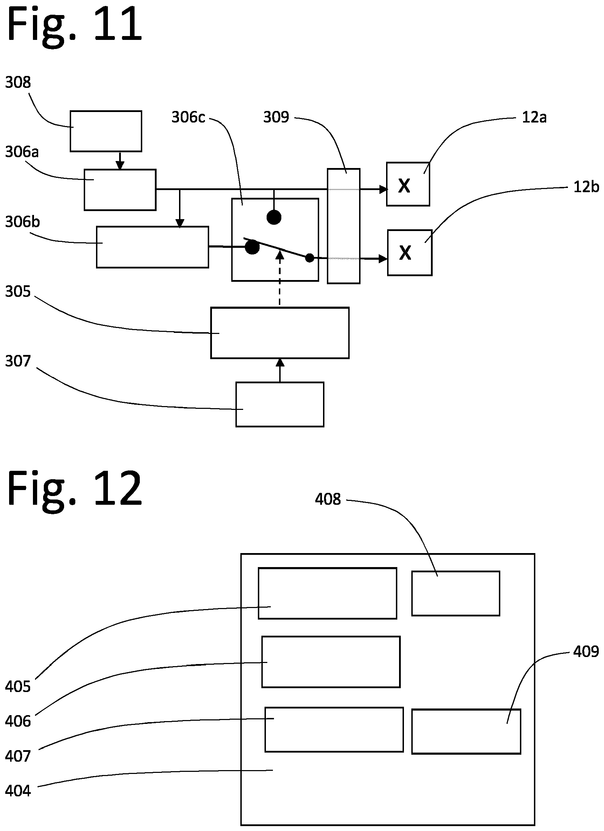

Fig. 11 zeigt eine Möglichkeit der Spulenansteuerung. Die erste Steuerungskomponente 306a erzeugt in konventioneller Weise ein Pulsbreitenmodulationssignal nach Maßgabe eines Antriebssollwerts aus einer Antriebssteuerung 308. Dieses Signal kann in jedem Fall zur Ansteuerung einer Spule 12a verwendet werden. Die zweite Steuerungskomponente 306b führt für das von der ersten Steuerungskomponente erzeugte Signal eine Phasenverschiebung durch, beispielsweise um π. Zur Bestromung der zweiten Spule 12b ist ein Wahlschalter 306c symbolisiert, der nach Maßgabe der ggf. nötigen Codierung betätigt wird. Wahlweise kann zur Bestromung der zweiten Spule 12b das der ersten Steuerungskomponente 306a entspringende Signal oder das der zweiten Steuerungskomponente 306b entspringende Signal gewählt werden. Zur Codierung eines Zeichens oder einer Zeichenfolge kann die Umschaltung mehrfach erfolgen. Wenn beide Spulen 12a und 12b mit dem Signal aus der ersten Steuerungskomponente 306a bestromt werden, werden sie strikt gleichzeitig bestromt, während wenn sie mit den phasenverschobenen Signalen bestromt werden, werden sie dementsprechend phasenverschoben bestromt. Mit 309 ist wieder die Spulenauswahlschaltung für die zu bestromenden Spulen symbolisiert.

Anders als in Fig. 11 gezeigt können die Spulen 12a und 12b aber auch mit abgesehen von der Phasenlage weitgehend unabhängig voneinander erzeugten Impulsen angesteuert werden. Sie können zueinander unterschiedliche Impulsbreiten haben. Auch während des Datensendens kann dies der Fall sein. Es ergibt sich dann auch bei gleichphasiger Ansteuerung im Wagen ein Wechselfluss, soweit der längere der beiden Impulse den kürzeren auf der Zeitachse überragt. Nach geeigneter Glättung kann dies aber von der gegenphasigen Ansteuerung anhand einer Schwellenwert-Entscheidung unterschieden werden.

Für die Bestimmung des Sendebeginns und/oder des Sendeendes und/oder des Decodierbeginns kann das gelten, was weiter oben schon betreffend Positionssensorik und ggf. Interpolation gesagt wurde.

Fig. 12 zeigt die Auswerteschaltung 404 im Empfänger 400 im Läufer 502 bzw. Wagen 15. Die vorgelagerte Wandlungsschaltung 403 kann beispielsweise eine Gleichrichtung und eine moderate Glättung des empfangenen Wechselsignals durchführen, um beispielsweise die Halbwellen zu glätten. Die Glättung darf allerdings nicht Modulationsergebnisse wegglätten.

Die Auswerteschaltung 404 empfängt das Signal von der Wandlungsschaltung und bearbeitet es weiter. Sie kann einen Beobachter 405 aufweisen, der feststellt, ob oder ob nicht modulierte bzw. gültige Signale vorliegen. Es können hier bekannte Techniken der drahtlosen Datenübertragung eingesetzt werden. Es ist ein Verfahren denkbar, bei dem permanent demoduliert wird. Mittels mathematischer Verfahren wie zyklische Redundanzprüfung (CRC) kann man dann prüfen, ob gültige Daten vorhanden sind. Das Verfahren kann so angelegt sein, dass zufälliges Rauschen nie oder höchst unwahrscheinlich zu gültigen Daten führt.

Der Beobachter kann einen Schwellenwertentscheider enthalten. Das Überschreiten eines Schwellenwerts kann als Beginn einer Modulation verstanden werden und es kann dann ggf. ein Decodierer bzw. Demodulierer 406 freigegeben werden, dem die Signale aus der Wandlungsschaltung 403 zugeführt werden. Auch hier kann an geeigneter Stelle ggf. eine Analog/Digital-Wandlung vorgesehen sein, jedenfalls soweit Signalverarbeitung angesprochen ist. Der Decodierer 406 kann invers zum Codierer 305 arbeiten und eine decodierte Zeichen- bzw. Bitfolge erzeugen, die beispielsweise in einem Speicher 408 eingespeichert oder über eine Schnittstelle 409 nach extern abgegeben werden kann. Der Speicher 408 kann RAM und/oder ROM und/oder Register umfassen. 407 kann eine Leistungssteuerungsschaltung sein, die ggf. nötige Funktionalitäten wie Leistungsaufnahme, z. B. "power harvesting", steuert.

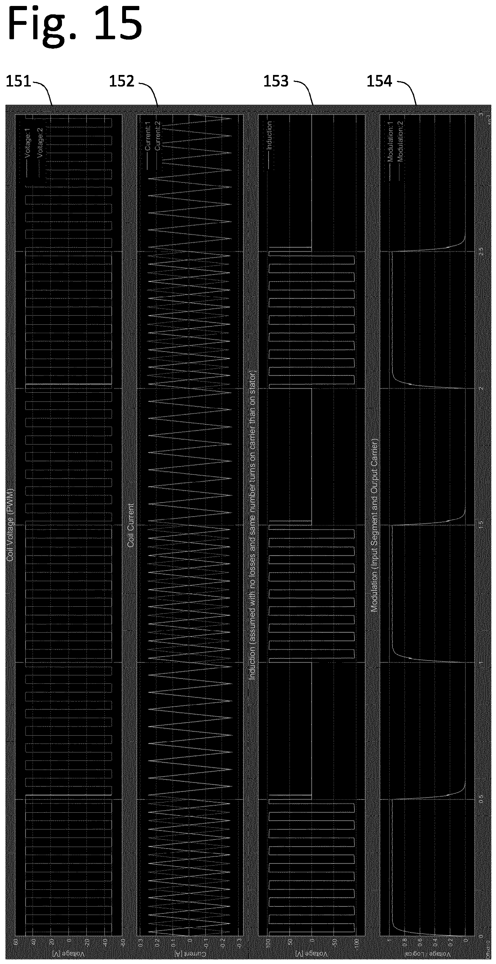

Fig. 15 zeigt simulierte Wellenformen. 151 zeigt übereinandergelegt zeitweise gleichphasige und zeitweise gegenphasige PWM-Impulse für zwei Elektromagneten. Angenommen ist ein Tastverhältnis von etwa 50 % in einem Vierquadrantensteller. Bei Gleichphasigkeit liegen sie aufeinander, bei Gegenphasigkeit füllen sie das Diagramm beim angenommenen Tastverhältnis von 50 % lückenlos.

152 zeigt die Spulenströme. Entsprechend dem allmählich ansteigenden Verlauf des Stroms beim Spannungssprung an einer Induktivität erscheinen sie dreiecksförmig. Auch hier liegen sie bei Gleichphasigkeit der Ansteuerung zweier Spulen aufeinander, während sie bei Gegenphasigkeit bzw. alternierender Ansteuerung gegenphasig sind.

153 zeigt die sich an der Erfassungsspule 402 im Wagen 15 ergebende induzierte Spannung. Bei gegenphasiger bzw. alternierender Ansteuerung ist sie markant vorhanden, da sich die nicht gleichzeitig erzeugten Flüsse nicht gegenseitig kompensieren, wie weiter oben erläutert, während sie bei gleichphasiger Ansteuerung der zwei Spulen näherungsweise 0 ist, da sich die gleichzeitig erzeugten Flüsse kompensieren. Die gezeigten Blöcke von je acht PWM-Zyklen können beispielhaft als je ein Datenbit verstanden werden. 153 würde demnach eine 010101-Folge zeigen. Eine Bitdauer ist dann die von acht PWM-Zyklen, die Bitrate dementsprechend ein Achtel der PWM-Impulsfrequenz.

154 zeigt ein gleichgerichtetes und geglättetes Signal aus der Aufnehmerspule 402. Es kann einerseits als Datensignal verstanden werden und kann so dem Decodierer zugeführt werden. Es kann andererseits auch als Leistungseintrag verstanden werden und zur Energiegewinnung entsprechend "power harvesting" verwendet werden.

Der Decodierer im Wagen/Läufer kann aus dem empfangenen analogen Rohsignal digitale Werte entsprechend einer Bitfolge erzeugen. Er kann einen Gleichrichter und ggf. einen Tiefpassfilter aufweisen, dessen Zeitkonstante über der gewünschten Bitdauer liegen kann. Er kann auch eine Schnittstelle hin zu digitalen Komponenten aufweisen, etwa hin zu einem digitalen Speicher, in den die digitalen Bits seriell eingeschrieben werden.

Die Erfindung kann auch als ein Informationssendeverfahren bzw. ein Informationsempfangsverfahren in Transportsystemkomponenten - Schiene 17 und Wagen 15 - bzw. in Linearmotorkomponenten - Stator 501 und Läufer 502 - und als Informationsübermittlungsverfahren in einem Linearmotor oder Transportsystem angesehen werden. Vorzugsweise laufen diese Verfahren in den vorbeschriebenen Komponenten.

Das Informationssendeverfahren läuft in einer Linearmotorkomponente bzw. Transportsystemkomponenten mit mindestens zwei unabhängig ansteuerbaren Spulen bzw. Elektromagneten für den Antrieb ab. Für jede der zwei Spulen wird je ein PWM-Ansteuersignal erzeugt. Die Impulsbreiten der Ansteuersignale werden nach Maßgabe eines Antriebssollwerts gesetzt. Die relative Phasenlage der PWM-Ansteuersignale wird nach Maßgabe der zu übermittelnden Information gesetzt.

Dieses Setzen kann das mehrfache Ändern der Einstellung der relativen Phasenlage der PWM-Ansteuersignale umfassen, insbesondere das mehrfache Umschalten zwischen zwei unterschiedlichen Phasenlagen, insbesondere nach Maßgabe einer Bitfolge einer seriell zu sendenden digitalen Information.

Das Informationsempfangsverfahren läuft in einer Linearmotorkomponente bzw. Transportsystemkomponenten mit passiven Magnetkomponenten ab. Es wird ein in einer passiven Magnetkomponente, insbesondere einem Eisenkern oder Dauermagneten erzeugter, sich ändernder magnetische Fluss in elektrische Größen gewandelt. Diese werden einer Signalauswertung und insbesondere einer Decodierung oder Demodulierung unterworfen. Der sich ändernde magnetische Fluss wird vorzugsweise mit dem vorbeschriebenen Informationssendeverfahren erzeugt.

Ein Informationsübermittlungsverfahren hat das vorbeschriebene Informationssendeverfahren und das vorbeschriebene Informationsempfangsverfahren.

Ein Aspekt der Erfindung ist eine Schiene 13, 17 eines schienengestützten Transportsystems 11 mit einem Linearmotor-Stator 300 wie beansprucht und/oder beschrieben. Ein weiterer Aspekt der Erfindung ist ein Wagen 15 eines Transportsystems 11, vorzugsweise wie beansprucht und/oder beschrieben, mit einem Linearmotor-Läufer 15, 400 wie beansprucht und/oder beschrieben. Ein weiterer Aspekt der Erfindung ist ein Transportsystem mit einem Linearmotor wie beansprucht und/oder beschrieben. Ein weiterer Aspekt der Erfindung ist ein Linearmotor-Stator mit einer Steuerung nach einem der Ansprüche 1 bis 9, und einem Positionsgeber-Empfänger wie beansprucht und/oder beschrieben. Ein weiterer Aspekt der Erfindung ist ein Linearmotor-Läufer mit einem Linearmotor-Läufer wie beansprucht und/oder beschrieben und einem Positionsgeber-Sender wie beansprucht und/oder beschrieben. Ein weiterer Aspekt der Erfindung ist ein Linearmotor mit einem Linearmotor-Läufer wie beansprucht und/oder beschrieben und einem Linearmotor-Stator wie beansprucht und/oder beschrieben. Ein weiterer Aspekt der Erfindung ist eine Transportsystem-Schiene mit einem Linearmotor-Stator nach Anspruch 10, und einem Positionsgeber-Empfänger wie beansprucht und/oder beschrieben. Ein weiterer Aspekt der Erfindung ist ein Transportsystem-Wagen mit einem Linearmotor-Läufer nach einem der Ansprüche 11 bis 14 und einem Positionsgeber-Sender wie beansprucht und/oder beschrieben. Ein weiterer Aspekt der Erfindung ist ein Transportsystem mit einem Transportsystem-Schiene wie beansprucht und/oder beschrieben, und einem Transportsystem-Wagen wie beansprucht und/oder beschrieben. Ein weiterer Aspekt der Erfindung ist ein Informationsübermittlungsverfahren mit einem Informationssendeverfahren wie beansprucht und/oder beschrieben und einem Informationsempfangsverfahren wie beansprucht und/oder beschrieben.

Ein weiterer Aspekt der Erfindung ist ein Informationssendeverfahren in einer Linearmotorkomponente mit mindestens zwei unabhängig ansteuerbaren Spulen bzw. Elektromagneten für den Antrieb, bei dem für jede der zwei Spulen je ein PWM-Ansteuersignal erzeugt wird, wobei die Impulsbreiten der Ansteuersignale nach Maßgabe eines Antriebssollwerts gesetzt werden und die relative Phasenlage der PWM-Ansteuersignale nach Maßgabe der zu übermittelnden Information gesetzt wird, wobei das Setzen das mehrfache Ändern der Einstellung der relativen Phasenlage der PWM-Ansteuersignale umfassen kann, insbesondere das mehrfache Umschalten zwischen zwei unterschiedlichen Phasenlagen, insbesondere nach Maßgabe der jeweiligen Bits einer Bitfolge einer seriell zu sendenden digitalen Information.

Ein weiterer Aspekt der Erfindung ist ein Informationsempfangsverfahren in einer Linearmotorkomponente mit passiven Magnetkomponenten, bei dem ein in einer passiven Magnetkomponente erzeugter, sich ändernder magnetische Fluss in elektrische Größen gewandelt wird, die einer Signalauswertung und insbesondere einer Decodierung oder Demodulierung unterworfen werden, wobei der sich ändernde magnetische Fluss vorzugsweise mit dem obigen Informationssendeverfahren erzeugt wird.

### H. Kommunikation in beide Richtungen

Bisher wurden die Kommunikationen in die beiden Richtungen getrennt beschrieben. Sie können aber auch kombiniert vorgesehen sein, wie in Fig. 1 schon angedeutet. Der Wagen 15 bzw. Läufer 502 weist den Positionsgeber-Sender 100 und den Empfänger 400 auf. Die Schiene 17 bzw. Stator 501 weist den Positionsgeber-Empfänger 200 und den Sender 300 auf.

Soweit Positionsgeber-Sender 100 und Empfänger 400 an Wagen 15 bzw. Läufer 502 gleiche Komponenten benötigen, können diese gemeinsam genutzt werden, etwa Energieversorgung, digitale Hardware und Rechenleistung, Speicher, A/D-Wandlung, D/A-Wandlung, Schnittstellen und Ähnliches. Gleiches gilt sinngemäß für Positionsgeber-Empfänger 200 und Sender 300 an Schiene 17 bzw. Stator 501. Auf Seiten von Stator/Schiene können lokale Komponenten das Ziel oder die Quelle der zu sendenden Information sein oder können der Weiterleitung an eine bzw. von einer zentralen Steuerung dienen.

### I. Allgemeine Merkmale

Angegeben wird auch ein Datenträger mit einem oder mehreren darauf gespeicherten ausführbaren Programmen, das oder die bei der Ausführung in einem digitalen Gerät zusammen mit diesem eine Einstellvorrichtung 103-106 eines Positionsgeber-Senders 100 und/oder eine Auswertevorrichtung 203 eines Positionsgeber-Empfängers 200 und/oder eine Steuerungsvorrichtung 303 für einen Linearmotor-Stator 300 und/oder eine Auswerteschaltung 404 eines Linearmotor-Läufers 15, 400 implementieren, soweit diese bzw. deren Komponenten softwareimplementierbar sind.

Die in dieser Beschreibung und den Ansprüchen beschriebenen oder in einer Abbildung dargestellten Merkmale sollen auch dann als untereinander kombinierbar gelten, wenn ihre Kombination nicht ausdrücklich beschrieben ist, soweit die Kombination technisch möglich ist. Merkmale, die in einem bestimmten Kontext, einer bestimmten Ausführungsform, Figur oder einem bestimmten Anspruch beschrieben werden, sollen auch als von diesem Anspruch, Kontext, Ausführungsform oder Figur trennbar und als mit jeder anderen Figur, Anspruch, Ausführungsform oder Kontext kombinierbar angesehen werden, soweit dies technisch möglich ist. Ausführungsformen und Figuren sollen nicht als notwendigerweise ausschließlich gegeneinander verstanden werden. Beschreibungen eines Verfahrens oder eines Ablaufs oder eines Verfahrensschrittes oder eines Ablaufschrittes sind auch als Beschreibung von Einrichtungen und/oder eventuell Programmanweisungen von ausführbarem Code auf einem Datenträger zu verstehen, die für die Implementierung des Verfahrens oder des Ablaufs oder des Verfahrensschrittes oder des Ablaufschrittes geeignet sind, und umgekehrt.

### Bezugszeichenliste

- 11: Transportsystem
- 12: Spule, Elektromagnet
- 13: Magnetmodul
- 15: Wagen
- 16: Dauermagnet
- 17: Schiene
- 18: Arbeitsstationen
- 19: Bewegungsrichtung
- 23: Dauermagnet
- 25: Rad
- 27: Nut
- 100: Bewegungsgeber-Sender
- 101: erste Magneteinrichtung, Dauermagnet
- 102: zweite Magneteinrichtung, Elektromagnet
- 103: Schalter
- 104: Energieversorgung
- 105: Treiberschaltung
- 106: Steuerungsvorrichtung
- 107: Leistungssteuerung
- 108: Modulierer
- 109: Zeitgeber
- 110: Speicher
- 111: Schnittstelle
- 131-134: Diagramme
- 141-148: Diagramme
- 151-154: Simulationsdiagramme
- 171,173: Dauermagnet
- 172: Kern
- 174,178: Wicklungen
- 175-177: Elektromagnet
- 200: Positionsgeber-Empfänger
- 201: Kern
- 202: Aufnehmespule
- 203: Wandlerschaltung
- 204: Auswerteschaltung
- 205: Demodulierer
- 206: Zeitgeber
- 207: Speicher
- 208: Schnittstelle
- 300: Sender
- 301: Schalterblock
- 302: Schalter
- 303: Steuerungsvorrichtung
- 304: Zeitgeber
- 305: Modulierer
- 306: PWM-Schaltung
- 306a: erste Steuerungskomponente
- 306b: zweite Steuerungskomponente
- 307: Speicher
- 308: Antriebssteuerung
- 309: Schnittstelle
- 400: Empfänger
- 402: Aufnahmespule
- 403: Wandlerschaltung
- 404: Auswerteschaltung
- 405: Zeitgeber
- 406: Demodulierer
- 407: Leistungssteuerung
- 408: Speicher
- 409: Schnittstelle
- 501: Stator
- 502: Läufer
- 999: Transportgut

## Patentansprüche

1. Steuerungsvorrichtung (303) zur Steuerung der Speisung von Elektromagneten (12) eines elektrischen Antriebs, insbesondere eines Linearmotor-Stators (300), mit elektrischer Leistung, mit einer Steuerungsvorrichtung mit
einer ersten Steuerungskomponente (306a), die dazu ausgelegt ist, nach Maßgabe eines Antriebs-Sollwerts die Erzeugung erste PWM-Steuerungssignale zur Steuerung der Bestromung der Elektromagneten zu veranlassen, und
einer zweiten Steuerungskomponente (306b), die dazu ausgelegt ist, es nach Maßgabe einer zu übertragenden Information zu veranlassen, die Erzeugung der ersten PWM-Steuerungssignale in eine Erzeugung anderer zweiter PWM-Steuerungssignale abzuwandeln.

2. Steuerungsvorrichtung (303) nach Anspruch 1, bei der
die erste Steuerungskomponente dazu ausgelegt ist, für zwei oder mehrere vorzugsweise in Bewegungsrichtung beabstandete Elektromagnete (12a, 12b) die Erzeugung erster PWM-Steuerungssignale in einer ersten relativen Phasenlage zueinander, vorzugsweise phasengleich, zu veranlassen, und
die zweite Steuerungskomponente dazu ausgelegt ist, es zu veranlassen, die Erzeugung der ersten PWM-Steuerungssignale dahingehend in die Erzeugung zweiter PWM-Steuerungssignale für die zwei Elektromagnete abzuwandeln, dass sie in einer anderen zweiten relativen Phasenlage zueinander liegen, vorzugsweise gegenphasig.

3. Steuerungsvorrichtung (303) nach Anspruch 2, bei der
die erste Steuerungskomponente dazu ausgelegt ist, zwei erste PWM-Steuerungssignale für je einen der zwei Elektromagnete in der ersten relativen Phasenlage zu erzeugen, wobei die Phasenverschiebung der ersten relativen Phasenlage der zwei ersten PWM-Steuerungssignale 0 betragen kann, und
die zweite Steuerungskomponente dazu ausgelegt ist, zwei zweite PWM-Steuerungssignale für je einen der zwei Elektromagnete in der zweiten relativen Phasenlage zu erzeugen, wobei die Phasenverschiebung der zweiten relativen Phasenlage der zwei zweiten PWM-Steuerungssignale π betragen kann.

4. Steuerungsvorrichtung (303) nach Anspruch 2 oder 3, die für eine bitweise serielle Übertragung digitaler Daten ausgelegt ist, wobei eine erste relative Phasenlage für den einen von zwei digitalen Werten eines Bits und die zweite relative Phasenlage für den anderen der zwei digitalen Werte des Bits gesetzt wird.

5. Steuerungsvorrichtung (303) nach Anspruch 2 oder 3, bei der die Steuerungsvorrichtung dazu ausgelegt ist, die zweite Steuerungskomponente nach Maßgabe der zu übertragenden Information zu aktivieren und zu deaktivieren.

6. Steuerungsvorrichtung (303) nach einem der Ansprüche 1 bis 5, bei der die Steuerung dazu ausgelegt ist, einen Startzeitpunkt und/oder einen Endzeitpunkt und/oder die zu übertragende Datenmenge für die Informationsübertragung zu bestimmen und die Informationsübertragung dementsprechend zu steuern.

7. Steuerungsvorrichtung (303) nach einem der Ansprüche 1 bis 6, bei der die zweite Steuerungskomponente (306b) der ersten Steuerungskomponente wahlweise nachschaltbar ist und insbesondere dazu ausgelegt sein kann, eine Ausgabe der ersten Steuerungskomponente (306a) zu verändern, vorzugsweise die Verschiebung von PWM-Impulse auf der Zeitachse zu veranlassen.

8. Steuerungsvorrichtung (303) nach einem der Ansprüche 1 bis 6, bei der die zweite Steuerungskomponente (306b) wahlweise statt der ersten Steuerungskomponente (306a) verwendbar ist und insbesondere zur PWM-Impulserzeugung die Verwendung eines zweiten Referenzsignals (148) veranlasst, das gegenüber einem ersten Referenzsignal (147), dessen Verwendung die ersten Steuerungskomponente (306a) veranlasst, phasenverschoben ist.

9. Steuerungsvorrichtung (303) nach einem der Ansprüche 1 bis 8 mit einer oder mehreren der folgenden Konfigurationen
• PWM-Impulsfrequenz über 1 oder 2 oder 5 oder 10 oder 20 kHz und/oder unter 1.000 oder 500 oder 200 oder 100 oder 50 oder 20 kHz,
• max. Geschwindigkeit der eingesteuerten Wanderwelle über 20 oder 50 oder 100 Elektromagnete/Sekunde und/oder unter 1.000 oder 500 oder 200 Elektromagnete/Sekunde,
• Ermittlung der zu bestromenden Elektromagnete und/oder des Sendebeginns anhand einer Positionssensorik und/oder anhand einer Positions-Interpolation und/oder eines Positionsbeobachters.

10. Linearmotor-Stator (300) mit
einer sich in Antriebsrichtung (19) erstreckenden Führungsschiene (17),
mehreren in Antriebsrichtung beabstandeten und an der Führungsschiene angeordneten Elektromagneten (12),
Schaltvorrichtungen (302) zum individuellen Einstellen der Bestromung der Elektromagnete,
einer Steuerungsvorrichtung (303) nach einem der Ansprüche 31 bis 39 zur Ansteuerung der Schaltvorrichtungen.

11. Linearmotor-Läufer (500) mit
Rollen (25) zum Abrollen auf einer sich in Antriebsrichtung (19) erstreckenden Führungsschiene (17),
einem Magnetkern (23, 401), der so angeordnet ist, dass er von einem von einem Linearmotor-Stator (300) erzeugten Magnetfeld durchsetzt werden kann,
einer um den Magnetkern gewickelten Aufnahmespule (402), die dazu ausgelegt ist, nach Maßgabe eines den Magnetkern durchsetzenden Magnetfelds induzierte elektrische Größen zu erzeugen,
einer mit der Aufnahmespule verbundenen Schaltung (400), die dazu ausgelegt ist, die den induzierten elektrischen Größen inhärente Information aufzunehmen, umzuformen und zu speichern,
wobei die Schaltung dazu ausgelegt sein kann, die den induzierten elektrischen Größen inhärente elektrische Energie aufzunehmen, umzuformen und zu speichern.

12. Linearmotor-Läufer (15, 400) nach Anspruch 11, bei der die Schaltung dazu ausgelegt ist, die den induzierten elektrischen Größen entnehmbaren elektrischen Signale aufzunehmen, umzuformen, vorzugsweise in digitale Signale, und zu speichern, vorzugsweise in einem digitalen Speicher, wobei die Schaltung eine Auswerteschaltung (404) aufweisen kann zum Dekodieren und/oder Demodulieren eines von der Aufnahmespule (402) her empfangenen Signals.

13. Linearmotor-Läufer (15, 400) nach einem der Ansprüche 11 bis 12, bei der die Schaltung dazu ausgelegt ist, den Beginn der Informationsübertragung zu erkennen und ab dann die aufgenommenen elektrischen Größen als übertragene Information zu speichern.

14. Vorrichtung nach einem der vorherigen auf eine Vorrichtung gerichteten Ansprüche, mit einer Positionserfassungsvorrichtung zum Bestimmen der Position eines Wagens (15) oder Läufers (17) oder mit einer Schnittstelle zu einer solchen Positionserfassungsvorrichtung zum Empfangen entsprechender Positionsinformation, wobei die Vorrichtung dazu ausgelegt ist, die von der Positionserfassungsvorrichtung bestimmte oder von der Schnittstelle empfangene Positionsinformation für einen oder mehrere der folgenden Zwecke zu verwenden:
• Bestimmung des Sendebeginns für eine Datensendung von Schiene/Stator (17, 501) zu Wagen/Läufer (15, 502),
• Bestimmung des Sendeendes für eine Datensendung von Schiene/Stator (17, 501) zu Wagen/Läufer (15, 502),
• Bestimmung des Empfangsbeginns bzw. Decodierbeginns in einem Wagen/Läufer (15, 502),
• Bestimmung der für das Datensenden verwendeten Stator-Spulen (12),
• Bestimmung der für den Vortrieb verwendeten Stator-Spulen (12),
• allgemeine Funktionen.

15. Datenträger mit einem oder mehreren darauf gespeicherten ausführbaren Programmen, das oder die bei der Ausführung eine Steuerungsvorrichtung (303) nach Anspruch 1 bis 9 und/oder eine Auswerteschaltung (404) eines Linearmotor-Läufers (15, 400) nach Anspruch 11 bis 13 implementieren.

## Geänderte Patentansprüche

### Geänderte Patentansprüche gemäss Regel 137(2) EPÜ.

1. Steuerungsvorrichtung (303) zur Steuerung der Speisung von Elektromagneten (12) eines elektrischen Antriebs, insbesondere eines Linearmotor-Stators (300), mit elektrischer Leistung, mit einer Steuerungsvorrichtung mit
einer ersten Steuerungskomponente (306a), die dazu ausgelegt ist, nach Maßgabe eines Antriebs-Sollwerts die Erzeugung erste PWM-Steuerungssignale zur Steuerung der Bestromung der Elektromagneten zu veranlassen, und
einer zweiten Steuerungskomponente (306b), die dazu ausgelegt ist, es nach Maßgabe einer zu übertragenden Information zu veranlassen, die Erzeugung der ersten PWM-Steuerungssignale in eine Erzeugung anderer zweiter PWM-Steuerungssignale abzuwandeln,
wobei
die erste Steuerungskomponente dazu ausgelegt ist, für zwei oder mehrere vorzugsweise in Bewegungsrichtung beabstandete Elektromagnete (12a, 12b) die Erzeugung erster PWM-Steuerungssignale in einer ersten relativen Phasenlage zueinander, vorzugsweise phasengleich, zu veranlassen, und
die zweite Steuerungskomponente dazu ausgelegt ist, es zu veranlassen, die Erzeugung der ersten PWM-Steuerungssignale dahingehend in die Erzeugung zweiter PWM-Steuerungssignale für die zwei Elektromagnete abzuwandeln, dass sie in einer anderen zweiten relativen Phasenlage zueinander liegen, vorzugsweise gegenphasig.

2. Steuerungsvorrichtung (303) nach Anspruch 1, bei der
die erste Steuerungskomponente dazu ausgelegt ist, zwei erste PWM-Steuerungssignale für je einen der zwei Elektromagnete in der ersten relativen Phasenlage zu erzeugen, wobei die Phasenverschiebung der ersten relativen Phasenlage der zwei ersten PWM-Steuerungssignale 0 betragen kann, und
die zweite Steuerungskomponente dazu ausgelegt ist, zwei zweite PWM-Steuerungssignale für je einen der zwei Elektromagnete in der zweiten relativen Phasenlage zu erzeugen, wobei die Phasenverschiebung der zweiten relativen Phasenlage der zwei zweiten PWM-Steuerungssignale π betragen kann.

3. Steuerungsvorrichtung (303) nach Anspruch 1 oder 2, die für eine bitweise serielle Übertragung digitaler Daten ausgelegt ist, wobei eine erste relative Phasenlage für den einen von zwei digitalen Werten eines Bits und die zweite relative Phasenlage für den anderen der zwei digitalen Werte des Bits gesetzt wird.

4. Steuerungsvorrichtung (303) nach Anspruch 1 oder 2, bei der die Steuerungsvorrichtung dazu ausgelegt ist, die zweite Steuerungskomponente nach Maßgabe der zu übertragenden Information zu aktivieren und zu deaktivieren.

5. Steuerungsvorrichtung (303) nach einem der Ansprüche 1 bis 4, bei der die Steuerung dazu ausgelegt ist, einen Startzeitpunkt und/oder einen Endzeitpunkt und/oder die zu übertragende Datenmenge für die Informationsübertragung zu bestimmen und die Informationsübertragung dementsprechend zu steuern.

6. Steuerungsvorrichtung (303) nach einem der Ansprüche 1 bis 5, bei der die zweite Steuerungskomponente (306b) der ersten Steuerungskomponente wahlweise nachschaltbar ist und insbesondere dazu ausgelegt sein kann, eine Ausgabe der ersten Steuerungskomponente (306a) zu verändern, vorzugsweise die Verschiebung von PWM-Impulse auf der Zeitachse zu veranlassen.

7. Steuerungsvorrichtung (303) nach einem der Ansprüche 1 bis 5, bei der die zweite Steuerungskomponente (306b) wahlweise statt der ersten Steuerungskomponente (306a) verwendbar ist und insbesondere zur PWM-Impulserzeugung die Verwendung eines zweiten Referenzsignals (148) veranlasst, das gegenüber einem ersten Referenzsignal (147), dessen Verwendung die ersten Steuerungskomponente (306a) veranlasst, phasenverschoben ist.

8. Steuerungsvorrichtung (303) nach einem der Ansprüche 1 bis 7 mit einer oder mehreren der folgenden Konfigurationen
• PWM-Impulsfrequenz über 1 oder 2 oder 5 oder 10 oder 20 kHz und/oder unter 1.000 oder 500 oder 200 oder 100 oder 50 oder 20 kHz,
• max. Geschwindigkeit der eingesteuerten Wanderwelle über 20 oder 50 oder 100 Elektromagnete/Sekunde und/oder unter 1.000 oder 500 oder 200 Elektromagnete/Sekunde,
• Ermittlung der zu bestromenden Elektromagnete und/oder des Sendebeginns anhand einer Positionssensorik und/oder anhand einer Positions-Interpolation und/oder eines Positionsbeobachters.

9. Linearmotor-Stator (300) mit
einer sich in Antriebsrichtung (19) erstreckenden Führungsschiene (17),
mehreren in Antriebsrichtung beabstandeten und an der Führungsschiene angeordneten Elektromagneten (12),
Schaltvorrichtungen (302) zum individuellen Einstellen der Bestromung der Elektromagnete,
einer Steuerungsvorrichtung (303) nach einem der Ansprüche 1 bis 8 zur Ansteuerung der Schaltvorrichtungen.

10. Linearmotor-Läufer (500) mit
Rollen (25) zum Abrollen auf einer sich in Antriebsrichtung (19) erstreckenden Führungsschiene (17),
einem Magnetkern (23, 401), der so angeordnet ist, dass er von einem von einem Linearmotor-Stator (300) erzeugten Magnetfeld durchsetzt werden kann,
einer um den Magnetkern gewickelten Aufnahmespule (402), die dazu ausgelegt ist, nach Maßgabe eines den Magnetkern durchsetzenden Magnetfelds induzierte elektrische Größen zu erzeugen,
einer mit der Aufnahmespule verbundenen Schaltung (400), die dazu ausgelegt ist, die den induzierten elektrischen Größen inhärente Information aufzunehmen, umzuformen und zu speichern,
wobei die Schaltung dazu ausgelegt sein kann, die den induzierten elektrischen Größen inhärente elektrische Energie aufzunehmen, umzuformen und zu speichern.

11. Linearmotor-Läufer (15, 400) nach Anspruch 10, bei der die Schaltung dazu ausgelegt ist, die den induzierten elektrischen Größen entnehmbaren elektrischen Signale aufzunehmen, umzuformen, vorzugsweise in digitale Signale, und zu speichern, vorzugsweise in einem digitalen Speicher, wobei die Schaltung eine Auswerteschaltung (404) aufweisen kann zum Dekodieren und/oder Demodulieren eines von der Aufnahmespule (402) her empfangenen Signals.

12. Linearmotor-Läufer (15, 400) nach einem der Ansprüche 10 bis 11, bei der die Schaltung dazu ausgelegt ist, den Beginn der Informationsübertragung zu erkennen und ab dann die aufgenommenen elektrischen Größen als übertragene Information zu speichern.

13. Vorrichtung nach einem der vorherigen auf eine Vorrichtung gerichteten Ansprüche, mit einer Positionserfassungsvorrichtung zum Bestimmen der Position eines Wagens (15) oder Läufers (17) oder mit einer Schnittstelle zu einer solchen Positionserfassungsvorrichtung zum Empfangen entsprechender Positionsinformation, wobei die Vorrichtung dazu ausgelegt ist, die von der Positionserfassungsvorrichtung bestimmte oder von der Schnittstelle empfangene Positionsinformation für einen oder mehrere der folgenden Zwecke zu verwenden:
• Bestimmung des Sendebeginns für eine Datensendung von Schiene/Stator (17, 501) zu Wagen/Läufer (15, 502),
• Bestimmung des Sendeendes für eine Datensendung von Schiene/Stator (17, 501) zu Wagen/Läufer (15, 502),
• Bestimmung des Empfangsbeginns bzw. Decodierbeginns in einem Wagen/Läufer (15, 502),
• Bestimmung der für das Datensenden verwendeten Stator-Spulen (12),
• Bestimmung der für den Vortrieb verwendeten Stator-Spulen (12),
• allgemeine Funktionen.

14. Datenträger mit einem oder mehreren darauf gespeicherten ausführbaren Programmen, das oder die bei der Ausführung eine Steuerungsvorrichtung (303) nach Anspruch 1 bis 8 und/oder eine Auswerteschaltung (404) eines Linearmotor-Läufers (15, 400) nach Anspruch 10 bis 12 implementieren.
